# EUROPEAN PATENT APPLICATION

(11) **EP 4 834 504 A1**
(43) Date of publication of application: **04.11.2026**
(21) Application number: 26171601.3
(22) Date of filing: 10.04.2026
(51) Int. Cl.: B22F 10/31, B22F 10/14, B22F 10/28, B22F 12/00, B22F 12/80, B33Y 10/00, B33Y 30/00, B33Y 50/02

(54) **CALIBRATION BOX FOR ADDITIVE MANUFACTURING APPARATUSES**

(30) Priority: 22.04.2025 US 202519185617
(71) Applicant: General Electric Company, Cincinnati, Ohio 45215 (US)
(72) Inventor: BROMBERG, Vadim, Evendale, 45215 (US); STERLE, John, Evendale, Ohio, 45215 (US)
(74) Representative: Hafner & Kohl PartmbB

(57) **Abstract**

A system for calibrating an apparatus (100) for forming a three-dimensional article includes an apparatus (100) configured to form a three-dimensional article. The apparatus (100) includes a process chamber (110). The apparatus (100) includes a box management system (116) comprising at least one of a conveyor arrangement or a lift platform assembly (136) configured to deliver a calibration box (1122) to the process chamber (110). The system includes the calibration box (1122). The calibration box (1122) includes an enclosure body (1200) and one or more sensors (1153, 1159, 1169) supported within the enclosure body (1200).

## Description

### TECHNICAL FIELD

The present specification generally relates to systems for forming three-dimensional articles and, more specifically, to systems for calibrating components of such systems.

### BACKGROUND

Additive manufacturing apparatuses can be utilized to build an object from build material, such as organic or inorganic powders, in a layer-wise manner. Examples of additive manufacturing processes include laser powder bed fusion and binder jet systems. In some applications, the powder material may be reactive with oxygen and the additive manufacturing process may be carried out in an inert atmosphere to reduce the amount of oxygen surrounding the object being built.

Various components of an additive manufacturing apparatus may be inspected or adjusted between builds. This includes re-calibrating or adjusting equipment to meet operating parameters, as well as determining when components need to be cleaned, replaced, or repaired. Such inspections or adjustments typically require an operator to access an interior of the additive manufacturing apparatus. Removing or refilling an environment of an additive manufacturing apparatus with an inert gas to provide the inert atmosphere, both before and after inspection or adjustment of one or more components of the additive manufacturing apparatus, can be time-consuming and costly. Further, since calibration, adjustments or inspections may require an inert environment, the operator may be exposed to a low oxygen environment or may come in contact with potentially harmful and combustible powders. This can increase operational cost, such as the need for personal protective equipment for the operator.

### BRIEF DESCRIPTION OF THE DRAWINGS

The aspects set forth in the drawings are illustrative and exemplary in nature and not intended to limit the subject matter defined by the claims. The following detailed description of the illustrative aspects can be understood when read in conjunction with the following drawings, where like structure is indicated with like reference numerals and in which:
FIG. 1 is a diagrammatic view of an additive manufacturing apparatus;
FIG. 2 is a perspective view of another additive manufacturing apparatus, according to one or more aspects shown and described herein;
FIG. 3A is a perspective view of a build box carriage of the additive manufacturing apparatus of FIG. 2, according to one or more aspects shown and described herein;
FIG. 3B is a detailed view of the build box carriage of FIG. 3A, according to one or more aspects shown and described herein;
FIG. 3C illustrates a lift platform mount bracket for mounting a lift platform assembly to the build box carriage of FIG. 3A, according to one or more aspects shown and described herein;
FIG. 4 is a perspective, simplified view of the additive manufacturing apparatus of FIG. 2 with build box management and lid management systems, according to one or more aspects shown and described herein;
FIG. 5 is a perspective view of a lift platform assembly for use with the box management system of FIG. 4, according to one or more aspects shown and described herein;
FIG. 6 is a section view of the lift platform assembly of FIG. 5 in use, according to one or more aspects shown and described herein;
FIG. 7 is a section view of the lift platform assembly of FIG. 5 in use, according to one or more aspects shown and described herein;
FIG. 8 is a section view of the lift platform assembly of FIG. 5 in use, according to one or more aspects shown and described herein;
FIG. 9 is a perspective view of another lift platform assembly, according to one or more aspects shown and described herein;
FIG. 10 is a perspective view of a build box for use with the additive manufacturing apparatus of FIG. 2, according to one or more aspects shown and described herein;
FIG. 11A is a section view of the build box of FIG. 10, according to one or more aspects shown and described herein;
FIG. 11B is a detailed view of area B of FIG. 11A;
FIG. 12 is a partial view of a build platform of the build box of FIG. 10, according to one or more aspects shown and described herein;
FIG. 13 is a perspective view of a calibration box with a lid for use with the additive manufacturing apparatus of FIG. 2, according to one or more aspects shown and described herein;
FIG. 14 is a top view of the calibration box of FIG. 13 without the lid and with a power meter at a first predetermined position and a laser cover at a first position, according to one or more aspects shown and described herein;
FIG. 15 is a top view of the calibration box of FIG. 13 with the power meter at a second predetermined position and the laser cover at a second position, according to one or more aspects shown and described herein;
FIG. 16 is a bottom view of the calibration box of FIG. 13, according to one or more aspects shown and described herein;
FIG. 17 is a side view of the calibration box for use with the additive manufacturing apparatus of FIG. 2, according to one or more aspects shown and described herein;
FIG. 18 is a front view of the calibration box for use with the additive manufacturing apparatus of FIG. 2, according to one or more aspects shown and described herein;
FIG. 19A is a section view of the calibration box without the lid for use with the additive manufacturing apparatus of FIG. 2, according to one or more aspects shown and described herein;
FIG. 19B is an enlarged portion of the section view of FIG. 19A at an area 19B identified in FIG. 19A, according to one or more aspects shown and described herein;
FIG. 20 is a perspective view of a sensor platform and sensors, according to one or more aspects shown and described herein;
FIG. 21 is a perspective view of the box management system of FIG. 4 in use, according to one or more aspects shown and described herein;
FIG. 22 is a top view of the box management system of FIG. 21, according to one or more aspects shown and described herein;
FIG. 23 is a perspective view of a portion of the additive manufacturing apparatus of FIG. 2, according to one or more aspects shown and described herein;
FIG. 24 is another perspective view of the additive manufacturing apparatus of FIG. 2, according to one or more aspects shown and described herein;
FIG. 25 is another perspective view of the additive manufacturing apparatus of FIG. 2, according to one or more aspects shown and described herein;
FIG. 26 is a perspective view of a hard stop in an open position for use with the additive manufacturing apparatus of FIG. 25, according to one or more aspects shown and described herein;
FIG. 27 is a perspective view of the hard stop of FIG. 26 in a stop position, according to one or more aspects shown and described herein;
FIG. 28 is another perspective view of the additive manufacturing apparatus of FIG. 2, according to one or more aspects shown and described herein;
FIG. 29 is another perspective view of the additive manufacturing apparatus of FIG. 2, according to one or more aspects shown and described herein;
FIG. 30 is a perspective view of the lid management system of FIG. 4, according to one or more aspects shown and described herein;
FIG. 31 is a section view of the lid management system of FIG. 30, according to one or more aspects shown and described herein;
FIG. 32 is a section view of a portion of a machine lid of the lid management system of FIG. 30 showing a seal in an inflated configuration, according to one or more aspects shown and described herein;
FIG. 33 is another section view of the portion of the machine lid of FIG. 30 in a deflated configuration, according to one or more aspects shown and described herein;
FIG. 34 illustrates operation of the lid management system of FIG. 4, according to one or more aspects shown and described herein;
FIG. 35 illustrates operation of the lid management system of FIG. 4, according to one or more aspects shown and described herein;
FIG. 36 illustrates operation of the lid management system of FIG. 4, according to one or more aspects shown and described herein;
FIG. 37 illustrates operation of the lid management system of FIG. 4, according to one or more aspects shown and described herein;
FIG. 38 illustrates operation of the lid management system of FIG. 4, according to one or more aspects shown and described herein;
FIG. 39 illustrates operation of the lid management system of FIG. 4, according to one or more aspects shown and described herein;
FIG. 40 illustrates operation of the lid management system of FIG. 4, according to one or more aspects shown and described herein;
FIG. 41 is a perspective view of another lid management system, according to one or more aspects shown and described herein;
FIG. 42 is a perspective view of a machine lid and an enclosure lid of the lid management system of FIG. 41, according to one or more aspects shown and described herein;
FIG. 43 is a block diagram of components of the additive manufacturing apparatus of FIG. 2 and the calibration box of FIG. 13, according to one or more aspects shown and described herein; and
FIG. 44 is a process flow diagram illustrating a process for calibrating the additive manufacturing apparatus using the calibration box.

### DETAILED DESCRIPTION

Aspects described herein are directed to a system and method that includes an apparatus for forming a three-dimensional article, a calibration box with one or more sensors supported therein, and a box management system for delivering the calibration box to, and retrieving the calibration box from, a process chamber of the apparatus. As used herein, delivering the calibration box to the process chamber refers to moving or otherwise positioning the calibration box at, adjacent, or inside the process chamber such that the one or more sensors of the calibration box can collect information regarding operation of components of the apparatus that are disposed within the process chamber, e.g., as described herein. Information collected with the one or more sensors can be used to set a parameter of, calibrate, or evaluate the condition of the apparatus. Various aspects of the system and method and the operation of the system and method are described in more detail herein. Whenever possible, the same reference numerals will be used throughout the drawings to refer to the same or like parts.

It should be noted that while additive manufacturing using binder jetting is described primarily below, the calibration boxes, build boxes, lid management systems and box management systems described herein can be used with other types of additive manufacturing apparatuses, such as selective laser sintering (SLS), direct metal laser sintering (DMLS), electron beam melting (EBM), etc.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," is not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10-percent margin.

Directional terms as used herein - for example, up, down, right, left, front, back, top, bottom, upper, lower, - are made only with reference to the figures as drawn and are not intended to imply absolute orientation unless otherwise expressly stated.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of aspects described in the specification.

As used herein, the singular forms "a," "an" and "the" include plural referents unless the context clearly dictates otherwise. Thus, for example, reference to "a" component includes aspects having two or more such components, unless the context clearly indicates otherwise.

As used herein, the term "three-dimensional structures" and the like refer generally to intended or actually fabricated three-dimensional configurations (e.g., of structural material or materials) that are intended to be used for a particular purpose. Such structures are, in certain examples, designed with the aid of a computer aided design (CAD) program. As used herein, the term "two-dimensional structures" and the like refer generally to layers of the three-dimensional structure that when built, one over the other, form the three-dimensional structures. While referred to as "two-dimensional structures," it should be understood that each layer includes an accompanying thickness in a third dimension, albeit the structures have a relatively planar configuration compared to a fused stack of the two-dimensional structures that form the three-dimensional structures.

### General Additive Manufacturing Processes and Components

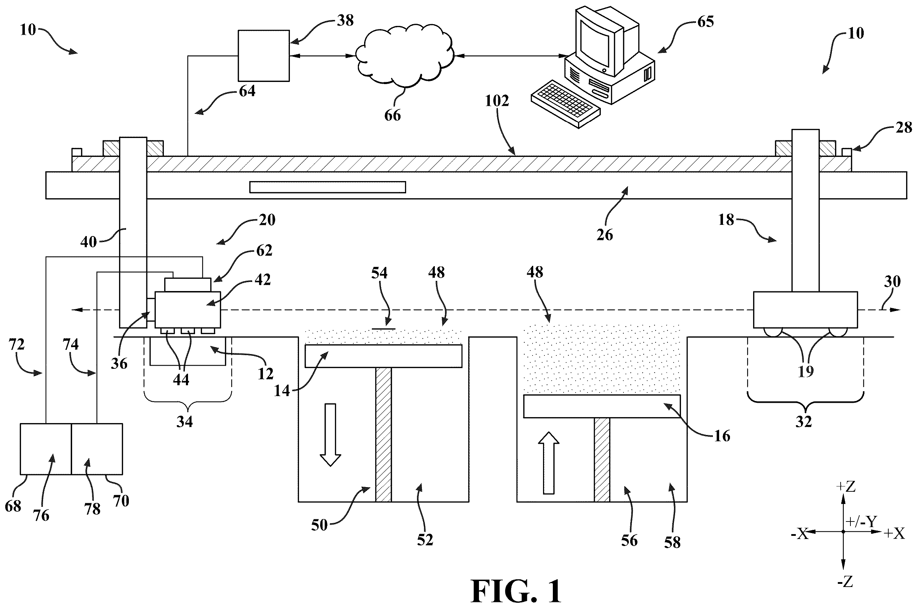

Referring to FIG. 1, a manufacturing apparatus 100 according to some aspects of the disclosure is schematically depicted. The manufacturing apparatus 10 includes a cleaning station 12, a build area 14 defining a build area, a supply platform 16, a recoat assembly 18, and a printing assembly 20. The recoat assembly 18 and the printing assembly 20 are coupled to a rail 26 of the manufacturing apparatus 10 and are configured to translate along the rail 26 in response to an actuation of a first actuator assembly 28. The first actuator assembly 28 is, in certain non-limiting examples, constructed to facilitate independent control of the recoat assembly 18 and the printing assembly 20 along a working axis 30 of the manufacturing apparatus 10. The working axis 30 is also referred to herein as the "longitudinal axis" (e.g., extending along the +/-X axis of the coordinate axes as depicted in the figures.). The recoat assembly 18 and the printing assembly 20 can traverse the working axis 30 of the manufacturing apparatus 10 in the same direction and/or in opposite directions. The recoat assembly 18 and the printing assembly 20 can traverse the working axis 30 of the manufacturing apparatus 10 at different speeds and/or the same speed. The recoat assembly 18 includes one or more rollers 19 or blades to facilitate a distribution of a build material 48 over the build area 14 and the supply platform 16. The apparatus 10, in certain examples, is a selective laser sintering (SLS) apparatus, a direct metal laser sintering (DMLS) apparatus, or an electron beam melting (EBM) apparatus.

In the aspects described herein, the cleaning station 12, the build area 14, the supply platform 16, the recoat assembly 18, and the printing assembly 20 are positioned in series along the working axis 30 of the manufacturing apparatus 10 between a home position 34 of the printing assembly 20, located proximate an end of the working axis 30 in the -X direction, and a home position 32 of the recoat assembly 18, located proximate an end of the working axis 30 in the +X direction. In aspects, the build area 14 is positioned between the cleaning station 12 and the supply platform 16 along the working axis 30 of the manufacturing apparatus 10.

In aspects, a second actuator assembly 36 is, in certain non-limiting examples, constructed to facilitate independent control of the printing assembly 20 along a latitudinal axis (e.g., extending along the +/- Y axis of the coordinate axes as depicted in the figures), which is generally perpendicular to the longitudinal axis (e.g., the working axis 30). The first actuator assembly 28 and the second actuator assembly 36 are generally referred to as a printing head position control assembly. That is, the printing head position control assembly includes the first actuator assembly 28 configured to move the printing head along the longitudinal axis and the second actuator assembly 36 configured to move the printing head along a latitudinal axis. The printing head position control assembly is, in certain non-limiting examples, controlled via signals generated by a control system 38, such as an electronic control unit. The electronic control unit includes, in certain non-limiting examples, a processor and a non-transitory computer readable memory.

The printing assembly 20 is constructed to facilitate a deposition of a binder material 54 and/or other jettable composition materials (e.g., ink, fluid medium, colorant, nanoparticles, fluorescing particles, sintering aids, anti-sintering aids, etc.) over the layer of build material 48 in the build area 14 as the printing assembly 20 traverses the build area 14 along the working axis 30 of the manufacturing apparatus 10.

The printing assembly 20 comprises, among other features, a support bracket 40, a printing head 42, and a plurality of print heads 44. The support bracket 40 is movably coupled to the rail 26 and the first actuator assembly 28 of the manufacturing apparatus 10 while the printing head 42 is movably coupled to the support bracket 40 via the second actuator assembly 36.

Each print head 44 comprises one or more jet nozzles. When a plurality of jet nozzles are incorporated into a print head 44, the plurality of jet nozzles are spaced apart from one another. The plurality of jet nozzles are spaced apart from one another in a direction transverse to a longitudinal axis, where a distance from a first jet nozzle to a second jet nozzle positioned adjacent the first jet of the plurality of jets defines a jet-spacing. By way of example only, each of the print heads 44 include, in certain non-limiting examples, a plurality of jet nozzles from about 5,000 nozzles to about 6,000 nozzles, with each jet nozzle spaced apart from another by about 1/1150 inch from one another. Other jet nozzle spacing is possible and contemplated.

The recoat assembly 18 is constructed to facilitate a distribution of a build material 48 over the build area 14 and the supply platform 16. The build area 14 is coupled to a build platform actuator 50 to facilitate raising and lowering the build area 14 relative to the working axis 30 of the manufacturing apparatus 10 in a vertical direction (e.g., a direction parallel to the +/- Z axis of the coordinate axes depicted in the figures). The build area 14 and build platform actuator 50 are positioned in a build receptacle 52 located below the working axis 30 (e.g., in the -Z direction of the coordinate axes depicted in the figures) of the manufacturing apparatus 10. During operation of the manufacturing apparatus 10, the build area 14 is retracted into the build receptacle 52 by action of the build platform actuator 50 after each layer of binder material 54 is deposited on the build material 48 located on the build area 14.

Still referring to FIG. 1, the supply platform 16 is coupled to a supply platform actuator 56 to facilitate raising and lowering the supply platform 16 relative to the working axis 30 of the manufacturing apparatus 10 in a vertical direction (e.g., a direction parallel to the +/- Z axis of the coordinate axes depicted in the figures). The supply platform 16 and supply platform actuator 56 are positioned in a supply receptacle 58 located below the working axis 30 (e.g., in the -Z direction of the coordinate axes depicted in the figures) of the manufacturing apparatus 10. During operation of the manufacturing apparatus 10, the supply platform 16 is raised relative to the supply receptacle 58 and towards the working axis 30 of the manufacturing apparatus 10 by action of the supply platform actuator 56 after a layer of build material 48 is distributed from the supply platform 16 to the build area 14. It should be understood that, in other aspects, the manufacturing apparatus 10 does not include a supply platform 16, such as in aspects where build material is supplied to the build area 14 with, for example and without limitation, a build material hopper.

Still referring to FIG. 1, the cleaning station 12 is positioned proximate one end of the working axis 30 of the manufacturing apparatus 10 and is co-located with the home position 34 where the printing assembly 20 is located or "parked" before and after depositing a binder material 54 on a layer of build material 48 positioned on the build area 14. The cleaning station 12 includes, in certain non-limiting examples, one or more cleaning sections to facilitate cleaning the printing assembly 20, and in particular a plurality of print heads 44 of the printing assembly 20 between depositing operations. The cleaning sections include, for example and without limitation, a soaking station containing a cleaning solution for dissolving excess binder material 54 from the plurality of print heads 44, a wiping station for removing excess binder material 54 and cleaning solution from the plurality of print heads 44, a jetting station for purging binder material 54 and reestablish the meniscus in the plurality of print heads 44, a capping station for maintaining moisture in a plurality of jet nozzles of the plurality of print heads 44, or various combinations thereof. The printing assembly 20 is, in certain non-limiting examples, transitioned between the cleaning sections by the first actuator assembly 28. In aspects, the manufacturing apparatus 10 includes, in certain non-limiting examples, a jetting test area positioned proximate to one end of the working axis 30 adjacent to the cleaning station 12 and/or the home position 34. Although not shown, it should be understood that the jetting test area of the manufacturing apparatus 10 is, in certain non-limiting examples, configured to facilitate a binder material deposition by the printing assembly 20 prior to performing a deposition along the build area 14.

Still referring to FIG. 1, the manufacturing apparatus 10 includes, in certain non-limiting examples, a control system 38 communicatively coupled to the first actuator assembly 28, the second actuator assembly 36, the recoat assembly 18, and/or the printing assembly 20. The control system 38 is, in certain non-limiting examples, particularly coupled to one or more valves of a manifold assembly 62 of the printing assembly 20. In aspects, the control system 38 is coupled to the manufacturing apparatus 10 via a communication conduit 64, however, it should be understood that in other aspects the control system 38 is, in certain non-limiting examples, communicatively coupled to the manufacturing apparatus 10 via various other means or systems, such as, for example, through a wireless connection. The control system 38, which may also be referred to as an electronic control unit, comprises a processor and a non-transitory memory that includes computer readable and executable instructions stored thereon. Any action of the manufacturing apparatus 10, including the actions described herein, are, in certain non-limiting examples, caused to be performed by the computer readable and executable instructions (e.g., opening and closing valves within the manifold assembly 62) stored in the non-transitory memory of the control system 38 when executed by the processor of the control system 38. For example, one or more actuators are, in certain non-limiting examples, actuated by the computer readable and executable instructions stored in the non-transitory memory of the control system 38 when executed by the processor of the control system 38 to cause the valves of the manifold assembly 62 to operate.

In aspects, the control system 38 is, in certain non-limiting examples, further communicatively coupled to a computing device 65, optionally via a network 66, or directly via a communication link such as a wired or wireless connection. The computing device 65 is, in certain non-limiting examples, configured to carry out processes such as generating executable instructions for building a component with the manufacturing apparatus 10, such as by implementing CAD or other related three-dimensional drafting and rendering systems as well as a slicing engine or the like.

As shown in FIG. 1, the manufacturing apparatus 10 further includes at least one supply reservoir 68 and at least one return reservoir 70 fluidly coupled to the manifold assembly 62 of the printing assembly 20 via one or more conduit lines 72, 74, respectively. In aspects, the supply reservoir 68 is highly pressurized to force binder material into the printing head 42. Although the supply reservoir 68 and the return reservoir 70 are illustrated and discussed herein as being separate components for storing binder material, in aspects, the supply reservoir 68 and the return reservoir 70 are, in certain non-limiting examples, the same reservoir, such that binder material from the supply reservoir 68 is circulated back to the supply reservoir 68 instead of to a separate return reservoir 70.

The manifold assembly 62 includes an inlet reservoir and an outlet reservoir for storing the binder material. Each of the inlet reservoir and the outlet reservoir are, in certain non-limiting examples, in fluid communication with the plurality of print heads 44. In particular, the supply reservoir 68 and the return reservoir 70 are fluidly coupled to each of the plurality of print heads 44 disposed within the printing head 42 of the printing assembly 20 via the manifold assembly 62. The plurality of print heads 44 are recirculation-ready, such that binder material is initially delivered to the plurality of print heads 44 and any binder material that is not dispensed through the print heads 44 is drawn back out of the plurality of print heads 44. The binder material is initially delivered to the inlet reservoir of the manifold assembly 62 from the supply reservoir 68 and, subsequently, delivered to the plurality of print heads 44 from the inlet reservoir of the manifold assembly 62. Binder material is then drawn out of the plurality of print heads 44 and into the outlet reservoir of the manifold assembly 62. Thereafter, the binder material is, in certain non-limiting examples, drawn out of the outlet reservoir and delivered into the return reservoir 70.

In aspects, the first conduit line 72 and the second conduit line 74 are, in certain non-limiting examples, coupled to one another via a coupling mechanism, such as, for example, a manifold, a valve, and/or the like. In this instance, the reservoirs 68, 70 are, in certain non-limiting examples, in fluid communication with the coupling mechanism via the conduits lines 72, 74, and the coupling mechanism includes a third conduit line coupled thereto and extending to the printing head 42. The coupling mechanism is, in certain non-limiting examples, configured to selectively transition fluid communication between the fluid reservoirs 68, 70 and the printing head 42 such that the plurality of print heads 44 receive one of a first material 76 (e.g., binder solution from the supply reservoir 68) or a second material 78 (e.g., binder solution from the return reservoir 70) in response to an actuation of the coupling mechanism. It should be understood that the coupling mechanism is, in certain non-limiting examples, further configured to facilitate simultaneous fluid communication of the supply reservoir 68 and the return reservoir 70 with the printing head 42 such that the plurality of print heads 44 receive binder material from the supply reservoir 68 and the return reservoir 70 concurrently. Such an arrangement can, for example, enable faster refill of the manifold assembly 62 during and following purging.

In some instances, such as when working with reactive materials like aluminum or titanium, it is desirable to provide an environment that is inert using a gas like nitrogen or argon. An inert environment is one in which reactive powders can be used with low or no risk of contamination from gases that exist in the air, such as oxygen and carbon dioxide, with which the powders can have a chemical reaction and/or be combustible. Further, it is, in some instances, desirable to limit exposure of operators and machine components to powders that are used in build processes.

### Additive Manufacturing Apparatuses with Box and Lid Management Systems

Aspects described herein are directed to additive manufacturing apparatuses and components for additive manufacturing apparatuses that are, in certain non-limiting examples, implemented to improve the throughput of the additive manufacturing apparatus. The additive manufacturing apparatuses utilize a removable build box and calibration box that can be sealed and evacuated of air before exposing the internal volume to the inert environment within the process chamber. Such a sealed arrangement can allow for use and reuse of the inert environment in the process chamber as opposed to evacuating and inerting the process chamber before each build and/or calibration operation. A box handling system is described herein that can be used to handle the build boxes and the calibration box into and out of the additive manufacturing apparatuses and to handle them within the additive manufacturing apparatuses.

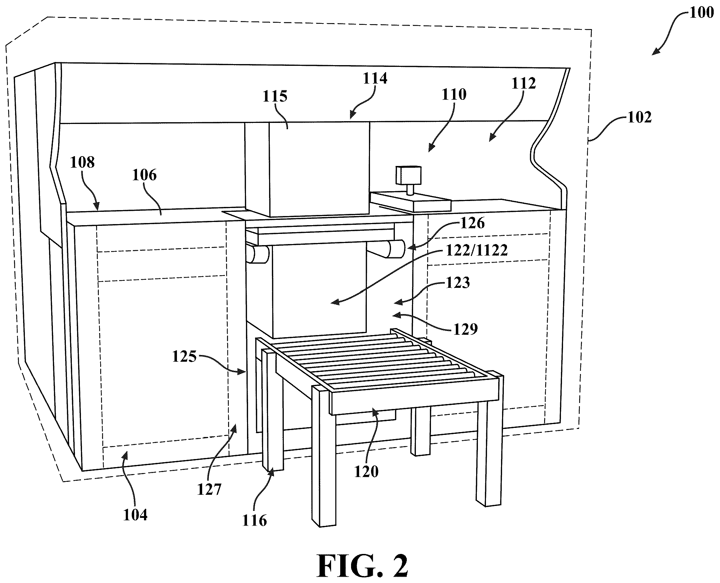

Referring to FIG. 2, a perspective view of the additive manufacturing apparatus 100 configured to form a three-dimensional article is illustrated. The apparatus 100 generally includes an outer housing 102 (represented by dashed lines) and a support structure or chassis 104 that is located in the outer housing 102. The chassis 104 supports a process chamber floor 106 of the apparatus 100. The process chamber floor 106 defines at least a portion of a bottom 108 of a process chamber 110 of the apparatus. The process chamber 110 is, in certain non-limiting examples, isolated within the outer housing 102 by an air-tight seal so that the environment within the process chamber 110 is inerted by forcing air out of the process chamber 110, e.g., using a vacuum system and/or providing an inert gas to the process chamber 110. The process chamber 110 is, in certain non-limiting examples, accessible through one or more movable access panels. For example, a front portion 112 of the outer housing 102 includes, in certain non-limiting examples, glass or transparent plastic doors or access panels that can be moved to access the process chamber 110. Providing transparent access panels can allow for viewing of components and the build process during use.

The additive manufacturing apparatus 100 includes, in certain non-limiting examples, a box management system 116 and a lid management system 114. The box management system is configured to deliver a box, such as the calibration box 1122 or the build box 122, to the process chamber 110. In FIG. 2 and various other FIGS., certain features are identified as being either the build box 122 or the calibration box 1122 (e.g., reference number 122/1122). In such FIGS., it is to be understood that the build box 122 and calibration box 1122 share similar structure such that the illustrated feature 122/1122 could be representative of either the build box 122 or the calibration box 1122, with respect to the relative teachings of that FIG. Likewise, other features in various of the FIGS. are identified as alternately representing similar (though not necessary identical) components of the build box 122 or the calibration box 1122, e.g., a top flange plate 202 of the build box 122 or a top flange plate 1202 of the calibration box 1122 (e.g. reference number 202/1202), a build platform 144 of the build box 122 or a sensor platform 1144 of the calibration box 1122 (e.g. reference number 144/1144), and the like.

### Box Management System

With reference to FIG. 2, the box management system 116 generally includes a conveyor arrangement that includes an intake conveyor 120 that receives the calibration box 1122 or the build box 122 and delivers the calibration box 1122 or the build box 122 to an elevated conveyor 126. The elevated conveyor 126 is, in certain non-limiting examples, a chain conveyor that engages the calibration box 1122 or the build box 122 at an elevated location, above (e.g., in the + Z direction of the coordinate axes depicted in the figures) a bottom of the calibration box 1122 or the build box 122. Other elevated conveyors are contemplated, such as roller or ball-type elevated conveyors. A bellows 115 seals the lid management system 114 from the surrounding inert environment during a lid management operation during which air is evacuated from the build box 122 or the calibration box 1122, which will be described further below.

The box management system 116 extends through a lower compartment 123 of the chassis 104 and comprises a box carriage 125 for receiving the calibration box 1122 or the build box 122. The box carriage 125 is adjustably coupled to a lower chassis section 127. In aspects, the lower chassis section 127 has a pass-through opening 129 for receiving the calibration box 1122 or the build box 122 such that the calibration box 1122 or the build box 122 is removably positioned in the opening 129. This opening 129 allows for the calibration box 1122 or the build box 122 (and the contents thereof) to be introduced to and removed from the additive manufacturing apparatus 100.

The box management system 116 extends through the opening 129 in the lower compartment 123. The box management system 116 can enable the calibration box 1122 or the build box 122 to be received from another conveyor system, automatically installed within the additive manufacturing apparatus 100, removed from the additive manufacturing apparatus 100, and transferred to another conveyor system. Accordingly, the box management system 116 can enable the calibration box 1122 or the build box 122 to pass through the additive manufacturing apparatus 100 in an automated fashion without requiring human intervention.

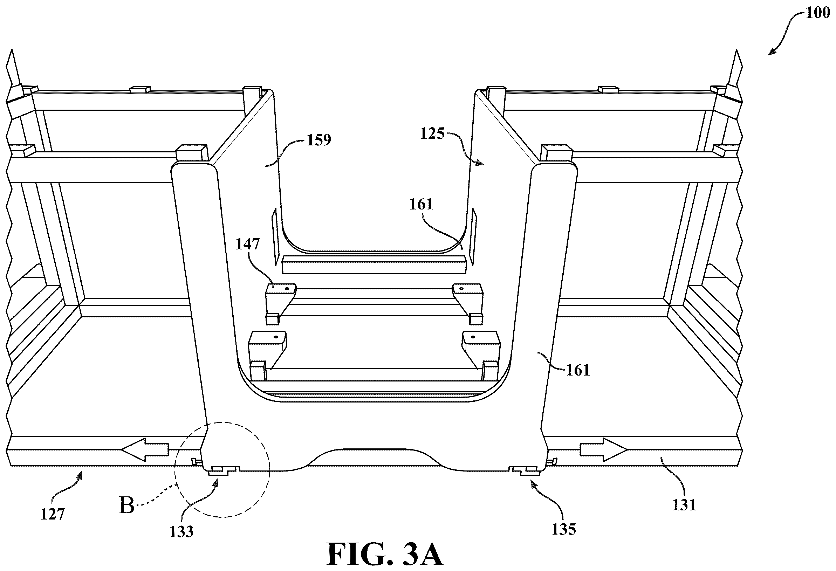

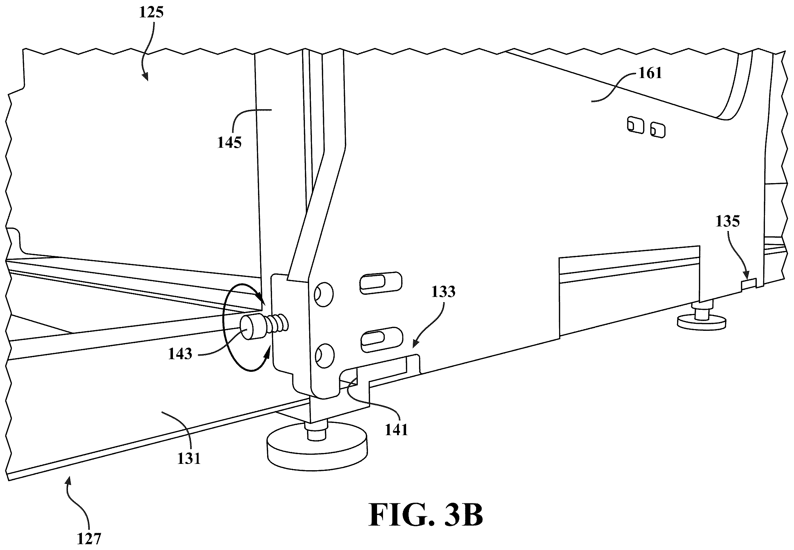

Referring now to FIGS. 3A and 3B, the box carriage 125 is shown in greater detail. The box carriage 125 includes sidewalls 159 and front and rear U-shaped walls 161 that together define a build box receiving volume within the lower chassis section 127. A lower horizontal support member 131 of the lower chassis section 127 includes a pair of stepped carriage supports 133, 135, proximate the lower compartment 123. Referring to FIG. 3B, each horizontal carriage support 133, 135 includes a corresponding hard stop 141 and extends in a lateral direction from the lower horizontal support member 131 and in a direction parallel to the working axis to provide a support surface on which the box carriage 125 is disposed.

With reference to FIG. 3B, the box carriage 125 includes, in certain non-limiting examples, at least one adjustment pin 143. The adjustment pin 143 is, in certain non-limiting examples, a set screw or other pin that extends through an aperture on the box carriage 125. When the box carriage 125 is positioned within the opening 129 and on the pair of horizontal carriage supports 133, 135, the adjustment pin 143 can be moved to push against the lower chassis section 127, and specifically, against one of the pair of vertical support members 145 to adjust a side-to-side position of the box carriage 125 relative to the chassis 104. The front-to-back position of the box carriage 125 can also be adjusted. The corresponding hard stop 141 on the pair of horizontal carriage supports 133, 135 extend vertically from the support surface on which the box carriage 125 is disposed to limit the range of side-to-side motion of the box carriage 125.

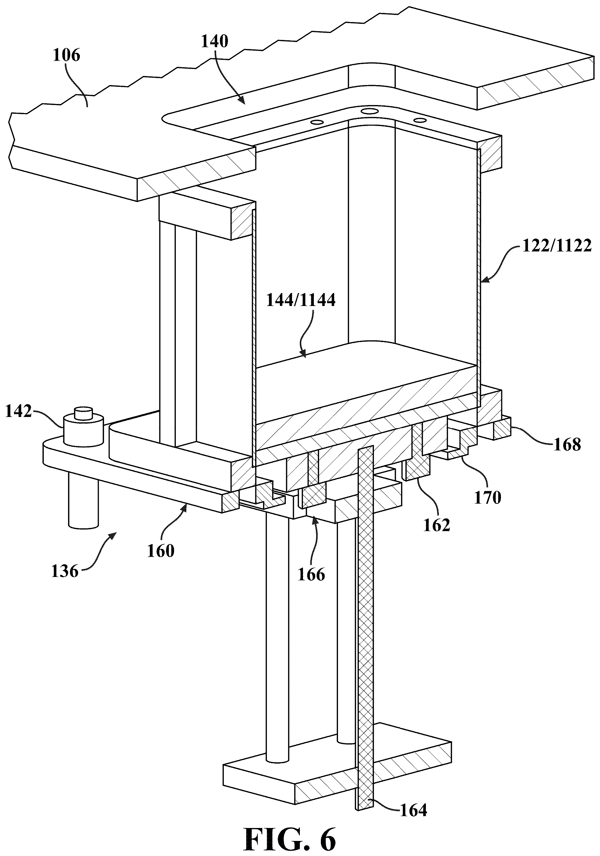

Referring again to FIG. 3A, the box carriage 125 includes lift platform mount brackets 147. In the illustrated example, there are four lift platform mount brackets 147; however, there are, in certain non-limiting examples, more or less than four lift platform mount brackets 147. The lift platform mount brackets 147 are provided to fixedly mount a support platform 137 of a lift platform assembly 136 (FIGS. 6-8) within the box carriage 125. As will be described in greater detail below, the lift platform assembly 136 is used to raise the calibration box 1122 or the build box 122 inside the box receiving volume of the box carriage 125.

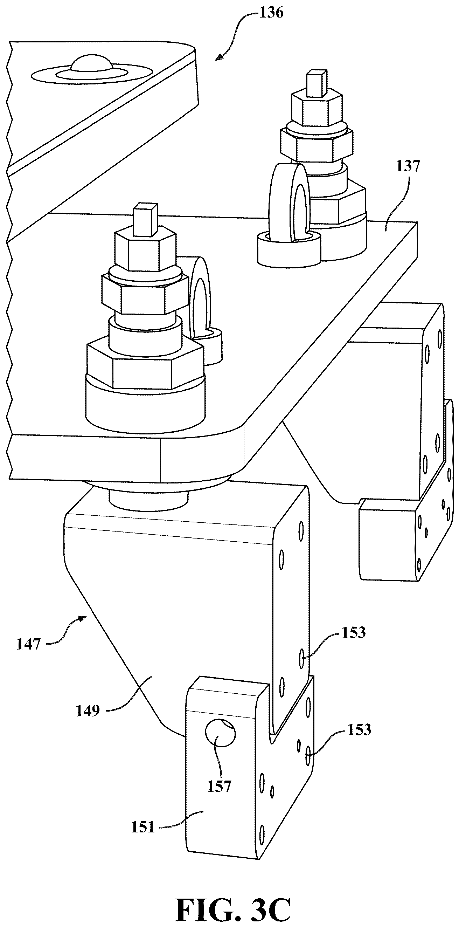

FIG. 3C illustrates the lift platform mount bracket 147 of FIG. 3A in greater detail mounted to the support platform 137 of the lift platform assembly 136. The mount bracket 147 includes an angled mounting block 149 that is mounted on an L-shaped bracket 151. The L-shaped brackets 151 are each mounted to the sidewalls 159 of the box carriage 125. Both of the mounting block 149 and the bracket 151 include fastener openings 153 that can be used to fixedly mount the brackets 151 and mounting block 149 to the sidewall 159 of the box carriage 125. Until the mounting block 149 is mounted to the sidewall 159 of the box carriage 125, the mounting block 149 is, in certain non-limiting examples, slidably supported on the bracket 151. An adjustment screw (not shown) is, in certain non-limiting examples, located in an opening 157. The adjustment screw, in certain non-limiting examples, allows for fine front-to-rear adjustment of the mounting block 149 and lift platform assembly 136 within the box carriage 125. When the lift platform assembly 136 is in the desired position, the mounting block 149 is, in certain non-limiting examples, mounted to the sidewall 159.

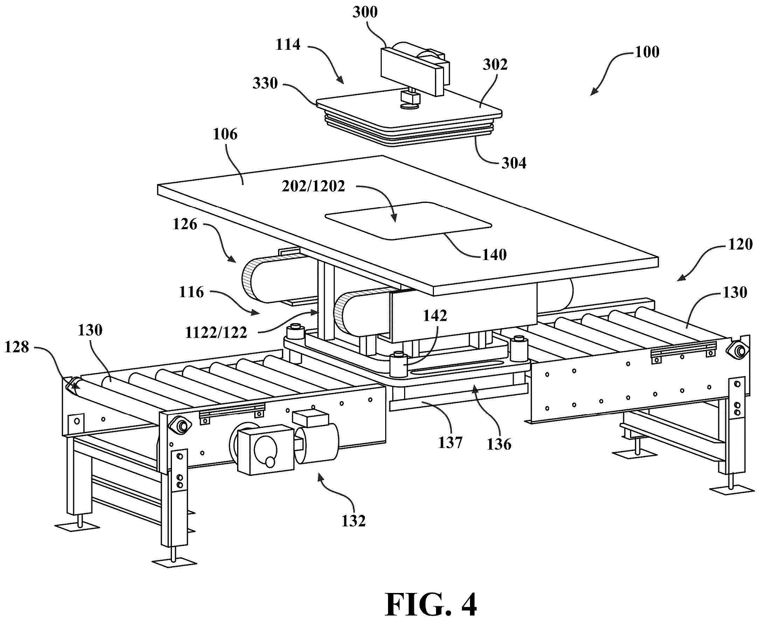

FIG. 4 illustrates a simplified view of the additive manufacturing apparatus 100 with the housing 102 and other components, such as a build head and bellows 115 (FIG. 2) removed. The box management system 116 includes the intake conveyor 120, the elevated conveyor 126, and an outfeed conveyor 128. In some aspects, the intake conveyor 120 and the outfeed conveyor 128 both include, in certain non-limiting examples, rollers 130 that rotate using one or more motors 132 in order to move the calibration box 1122 or the build box 122 linearly toward and away from the elevated conveyor 126. The intake conveyor 120 and/or outfeed conveyor 128 is, in certain non-limiting examples, are supported by two sets of legs and/or is freestanding or be supported by a single set of legs at one end and the chassis 104 (FIG. 2) at the other end, as shown. The elevated conveyor 126 engages a top flange plate 202, 1202 of the build box 122 or a top flange plate 1202 the calibration box 1122 to expose the bottom of the calibration box 1122 or the build box 122 to a lift platform assembly 136. The lift platform assembly 136 can raise and lower the calibration box 1122 or the build box 122 toward and away from an opening 140 in the process chamber floor 106.

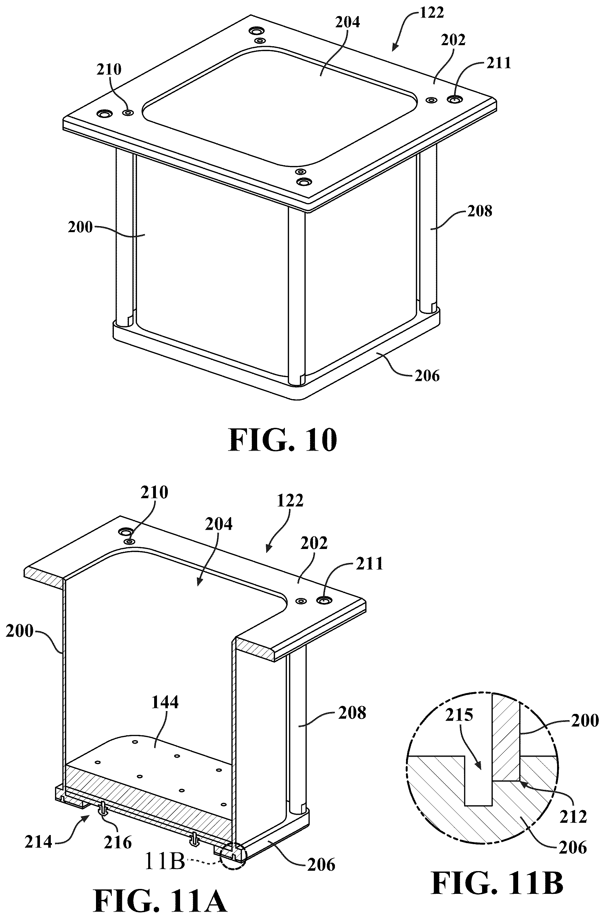

In the illustrated example, the opening 140 in the process chamber floor 106 has a shape (e.g., rectangular, such as square) that corresponds to a horizontal cross-sectional shape of the calibration box 1122 or the build box 122. A size of the opening 140 is, in certain non-limiting examples, slightly smaller than an outer perimeter of the top flange plate 202 of the build box 122 and an outer perimeter of the top flange plate 1202 the calibration box 1122 (FIGS. 10 and 11A) to allow the calibration box 1122 or the build box 122 to seal against an underside of the process chamber floor 106 and around the opening 140 as the calibration box 1122 or the build box 122 is raised to the opening 140. When the calibration box 1122 or the build box 122 is raised to the opening 140, the opening 140 is, in certain non-limiting examples, open to opening 204 of the top flange plate 202 of the build box 122 or open to opening 1204 of the top flange plate 1202 of the calibration box 1122. Actuators 142, such as gas springs or pneumatic cylinders, can be used to lift the lift platform assembly 136, which moves the calibration box 1122 or the build box 122 located thereon. Other actuators are, in certain non-limiting examples, used, such as a motor that is geared to move the calibration box 1122 or the build box 122 linearly up and down.

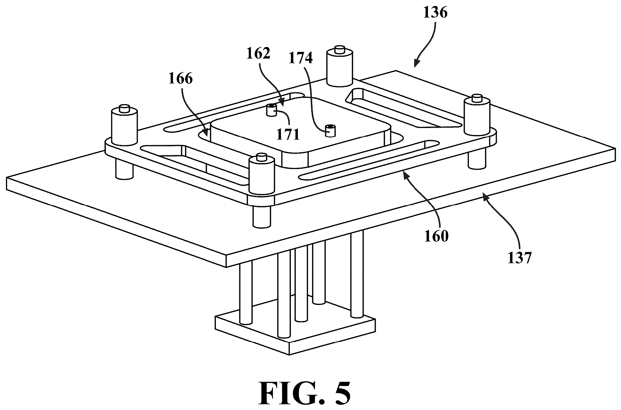

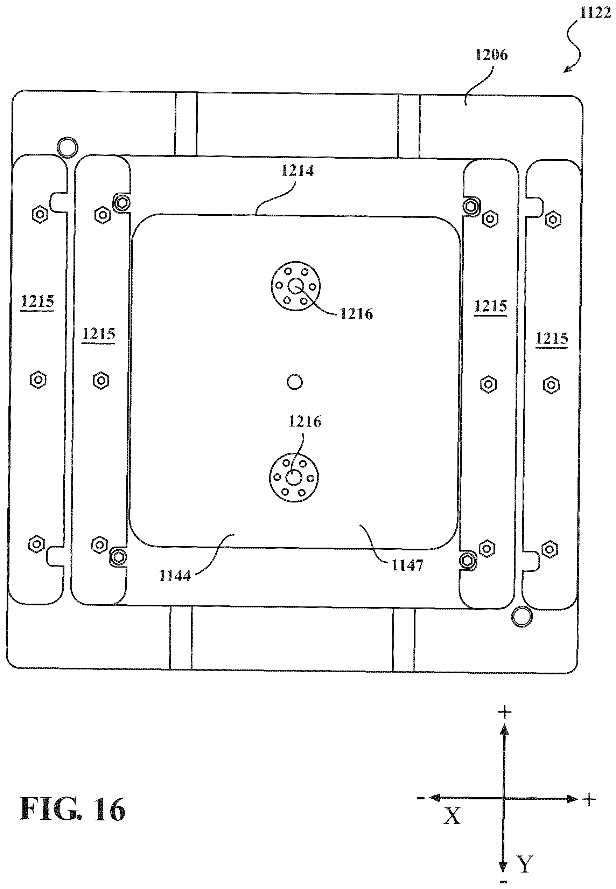

Referring to FIG. 5, the lift platform assembly 136 of FIG 4 is illustrated in greater detail and shown in isolation. The lift platform assembly 136 is a two-stage lift that includes the support platform 137, an outer lift platform 160, and an inner lift platform 162 located inside the outer lift platform 160. Clamping devices 171 and 174 are, in certain non-limiting examples, provided for engaging with studs 216, 1216 (FIGS. 11A and 16) on a bottom of the build platform 144 inside the build box 122 or on a bottom of the sensor platform 1144 of the calibration box 1122. The clamping devices 171 and 174 are, in certain non-limiting examples, pneumatically driven using a pressurized air source.

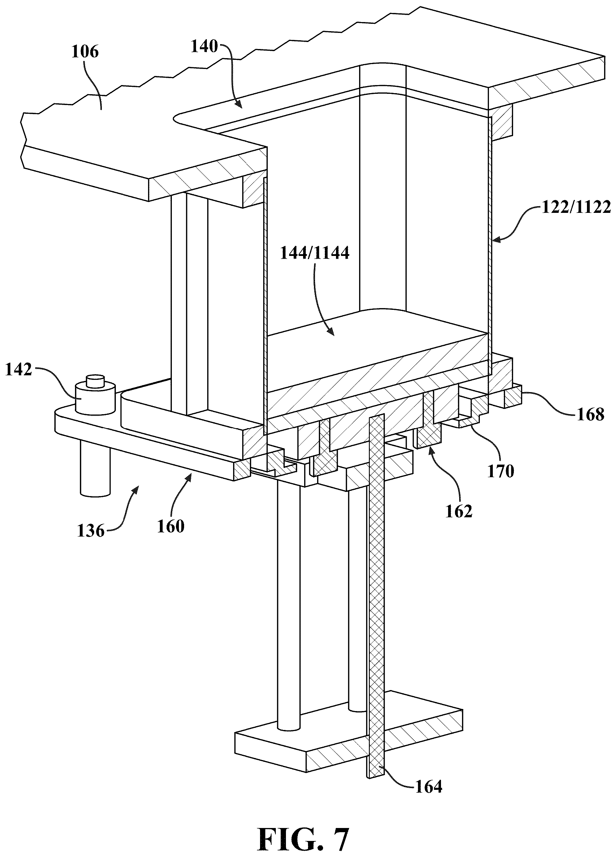

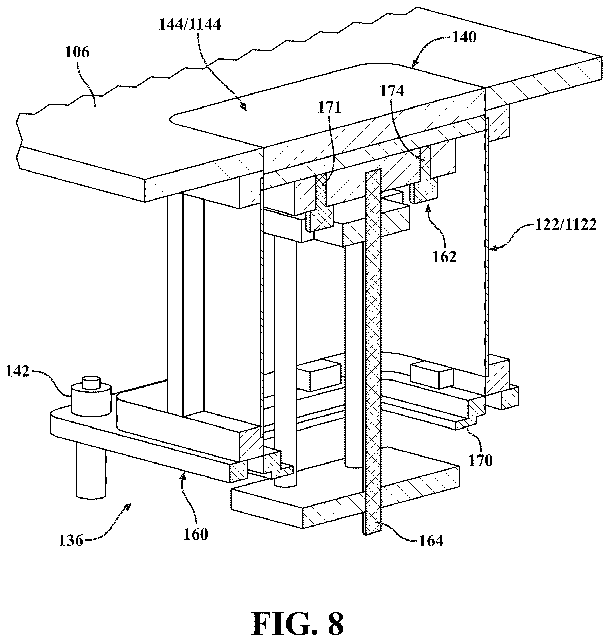

Referring to FIG. 6, a section view of the lift platform assembly 136 is illustrated without the support platform 137 and includes the outer lift platform 160 and the inner lift platform 162 that is located within an opening 166 through the outer lift platform 160. The outer lift platform 160 has a rim portion 168 on which the calibration box 1122 or the build box 122 sits and an inner flange portion 170 that defines a perimeter of the opening 166 that extends partially underneath the inner lift platform 162 defining a seat for the inner lift platform 162. Thus, the inner lift platform 162 captures the outer lift platform 160 as shown by FIG. 7 and forces the actuators 142 (e.g., gas springs) into their respective retracted position. The inner lift platform 162, in certain non-limiting examples, is raised using actuator 164 as shown by FIG. 8. As the inner lift platform 162 raises, the outer lift platform 160 raises therewith due to the bias of the actuators 142 toward extended positions. The outer lift platform 160 is used to lift the calibration box 1122 or the build box 122 toward the process chamber floor 106 using actuators 142, while the inner lift platform 162 is used to lift the build platform 144 inside the build box 122 or the sensor platform 1144 inside the calibration box 1122. The inner lift platform 162 is, in certain non-limiting examples, raised and lowered using an actuator 164, such as a ball screw actuator or telescoping ball screw. Further, there are, in certain non-limiting examples, multiple, such as two or four, actuators 164. Because the inner lift platform 162 rests on the inner flange portion 170 of the outer lift platform 160, the actuator 164 can also be used to lower the outer lift platform 160 back to the lowered position of FIG. 6 when gas springs are used as actuators 142.

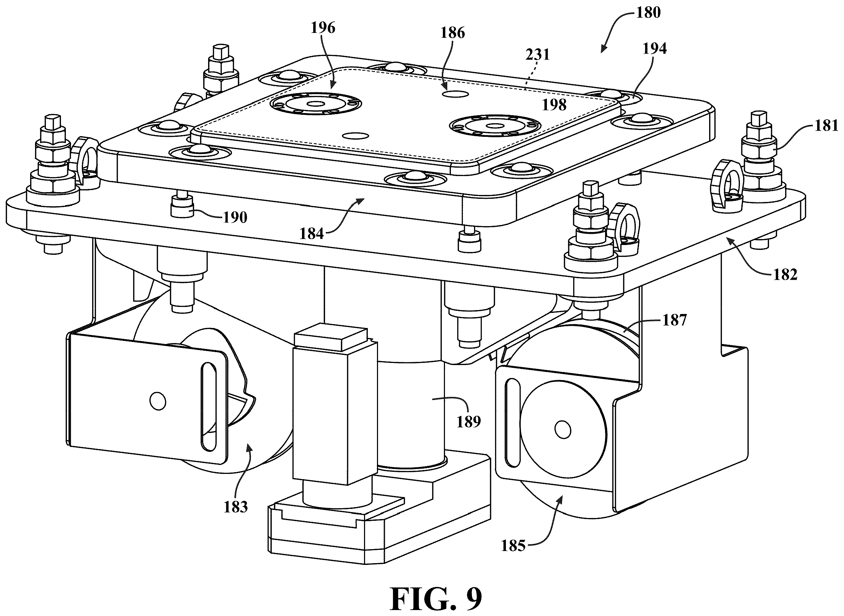

Referring now to FIG. 9, a more detailed aspect of another lift platform assembly 180 is illustrated. Any of the components shown and described with reference to FIG. 9 may be, in certain non-limiting examples, used with the lift platform assembly 136 described above. In this aspect, a support platform 182 is illustrated that can be mounted within the additive manufacturing apparatus 100 using mount brackets 147 (FIG. 3A) and fasteners 181. The support platform 182, in certain non-limiting examples, supports the lift platform assembly 180 within the additive manufacturing apparatus and provides a location from which the lift platform assembly 180 operates. Spools 183 and 185, such as e-spools, commercially available from igus Inc. of East Providence, RI, can be mounted to support platform 182 and used to manage both electrical and pneumatic cables and tubes, represented by element 187, and allow for movement of the electrical and pneumatic connections, for example, with the lift platform assembly 180.

As above, with the lift platform assembly 136, the lift platform assembly 180 includes an outer lift platform 184 and an inner lift platform 186. The inner lift platform 186 is directly mounted to an actuator 189, a non-limiting example of which include a servo-driven, telescoping ball screw unit. The outer lift platform 184 is indirectly mounted to the actuator 189 through its nested arrangement with the inner lift platform 186 as discussed above. The outer lift platform 184 is mounted to the support platform 182 using air springs 190 or other suitable actuators. The air springs 190 lift the outer lift platform 184 relative to the support platform 182 to raise the calibration box 1122 or the build box 122 and seal the calibration box 1122 or the build box 122 against the process chamber floor 106. Adjustment fasteners 181 are, in certain non-limiting examples, provided to adjust a height of corners of the support platform 182, and may further adjust a tilt and level the lift platform assembly 180 if needed.

In the illustrated aspect, the outer lift platform 184 includes ball transfer units 194. In this example, each side of the outer lift platform 184 includes two ball transfer units 194, for a total of eight ball transfer units 194. Each side of the outer lift platform 184 includes, in certain non-limiting examples, more than two, such as three ball transfer units 194 or less than two, such as one ball transfer unit 194. The ball transfer units 194 together facilitate sliding movement of the calibration box 1122 or the build box 122 over the lift platform assembly 180, for example, as the calibration box 1122 or the build box 122 is raised and registers with the bottom of the process chamber floor 106, as will be described in greater detail below. The inner lift platform 186 includes pneumatically-driven clamping devices 196 and 198 (e.g., those commercially available from Jergens, Inc. of Cleveland, OH) for engaging with the studs 216, 1216 (FIGS. 11A and 16) on the bottom of the build platform 144 inside the build box 122 or on a bottom the sensor platform 1144 of the calibration box 1122.

It should be noted that the lift platform assemblies 136 and 180 include, in certain non-limiting examples, any number of sensors for determining, for example, positions of the outer lift platforms 160, 184 and/or inner lift platforms 162, 186. Any suitable sensors may be used, such as integrated motor encoders, draw wire encoders, limit switches, etc. Further, sensors are, in certain non-limiting examples, included to provide an indication of build box 122, build platform 144, sensor platform 1144, and/or calibration box 1122 engagement/disengagement.

### Build Box

Referring to FIGS. 10, 11A and 11B, the build box 122 is shown in greater detail in order to describe operation of the box management system 116. Referring to FIG. 10, the build box 122 includes an enclosure body 200 that, in the illustrated aspect, is square-shaped in cross section thereby providing a build cross-sectional area. In some aspects, the build cross-sectional area is, in certain non-limiting examples, at least about 500 mm x 500 mm or more with a build height of at least 500 mm or more, such as 750 mm x 750 mm x 750 mm. A top flange plate 202 has an opening 204 that extends about a perimeter of the enclosure body 200. The build platform 144 is vertically movable within the second enclosure body 200.

The top flange plate 202 of the build box 122 includes, in certain non-limiting examples, locating pin openings 211 that receive locating pins to adjust a position of the build box 122. The top flange plate 202 is fixedly mounted to a bottom flange plate 206 of the build box 122 by one or more support columns 208. Fasteners 210 are, in certain non-limiting examples, used to fasten the top and bottom flange plates 202 and 206 to the support columns 208. While the top flange plate 202 extends about the periphery of the enclosure body 200, the bottom flange plate 206 has a stepped groove 212 that receives a bottom edge of the enclosure body 200. In this regard, the bottom flange plate 206 supports the enclosure body 200 thereupon and holds the enclosure body 200 between the top flange plate 202 and the bottom flange plate 206. A forklift may engage the top flange plate 202 to move the build box 122, e.g., to load the build box 122 into, or remove the build box 122 from, the box management system 116. For example, forks of a forklift may be positioned on opposite sides of the enclosure body 200 and may abut a bottom surface of the top flange plate 202 such that raising the forks lifts the build box 122.

The bottom flange plate 206 also has opening 214 that extends therethrough to the build platform 144. The build platform 144 rests on the bottom flange plate 206 and is slidable in the vertical direction relative to the enclosure body 200 by the lift platform assembly 136, 180 (shown, e.g., in FIGS. 6-9). Studs 216 or other clamping features, in certain non-limiting examples, are also provided that interface with the lift platform assembly 136, 180. A powder collection channel 215 shown in FIG. 11B is, in certain non-limiting examples, provided that can collect powder for removal. The powder collection channel 215 is, in certain non-limiting examples, continuous around the bottom flange plate 206. The powder collection channel 215 is, in other certain non-limiting examples, discontinuous around the bottom flange plate 206. The build box 122 may include wear plates, e.g., as discussed below for the calibration box 1122.

The build box 122 is, in certain non-limiting examples, formed to be quarter symmetric, as shown, in order to load the build box 122 onto the box management system 116 in any 90 degree orientation. This can allow for faster throughput of build boxes 122 by eliminating orientation steps while loading the build boxes 122. Further, by providing a multi-piece build box 122, certain ones of the wear surfaces can be removed and replaced without replacing the entire build box 122.

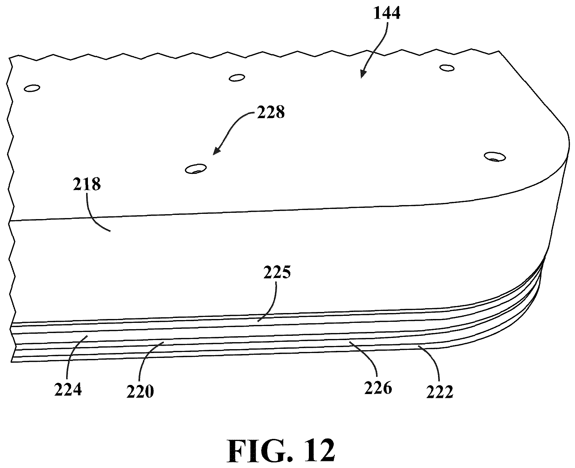

Referring briefly to FIG. 12, the build platform 144 is illustrated in isolation. The build platform 144 is a multi-piece construction that includes plates 218, 220 and 222. Plates 220 and 222 are, in certain non-limiting examples, stacked to form multiple grooves 224 and 226 that each receive one or more seals, such as a felt seal and a polymer seal, that abut and maintain a pressure against an inner surface of the enclosure body 200. A capture ring 225 is, in certain non-limiting examples, provided to cap the groove 224. A distributed bolt pattern 228 through the build platform 144 allows for increased surface contact and heat transfer through the build platform 144. For example, heating elements, represented by element 231 in FIG. 9, are, in certain non-limiting examples, embedded within the inner lift platform 186 in order to heat the powder on the build platform 144. Thus, the build platform 144 is, in certain non-limiting examples, formed using a thermally conductive material. In some aspects, the build platform 144 is, in certain non-limiting examples, formed of aluminum and the enclosure body 200, top and bottom flange plates 202 and 206 and support columns 208 of the build box 122 are, in certain non-limiting examples, formed of stainless steel. That is, the build platform 144 is, in certain non-limiting examples, more thermally conductive and formed of a lighter material than the rest of the build box construction.

The plate 218 is, in certain non-limiting examples, a spacer plate of increased thickness compared to the plates 220 and 222. The spacer plate 218 has, in certain non-limiting examples, a thickness that is selected to achieve a height that is sufficient to be flush with the top of the process chamber floor 106 during operation and with the inner lift plate in its fully extended position. As can be appreciated, the thickness of the plate 218 is, in certain non-limiting examples, at least about the same thickness as a thickness of the process chamber floor 106.

### Calibration box

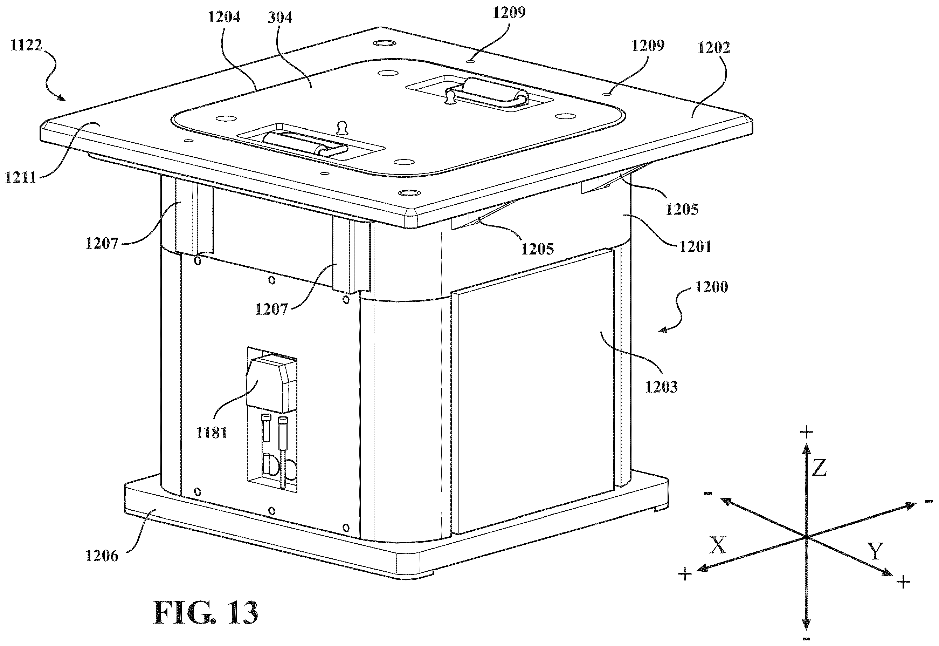

Referring to FIG. 13, the calibration box 1122 for calibrating the apparatus 100 is shown in greater detail in order to describe operation of the box management system 116. The calibration box 1122 includes an enclosure body 1200 that, in the illustrated aspect, is generally square-shaped in cross section thereby providing an internal cross-sectional area. In some aspects, the internal cross-sectional area is, in certain non-limiting examples, at least about 500 mm × 500 mm or more with an internal height of at least 500 mm or more, such as 750 mm × 750 mm × 750 mm. The enclosure body 1200 is, in certain non-limiting examples, formed of multiple pieces, for example and without limitation, a top piece 1201 and a bottom piece 1203. The top piece 1201 and the bottom piece 1203 are, in certain non-limiting examples, fixed to each other, e.g., via fastener, weld, or the like. The enclosure body 1200 is, in certain non-limiting examples, a single piece, e.g., monolithic (not shown). For the purposes of this disclosure, "monolithic" means a single-piece unit, e.g., a continuous piece of material without any fasteners, joints, welding, adhesives, etc., fixing multiple pieces to each other.

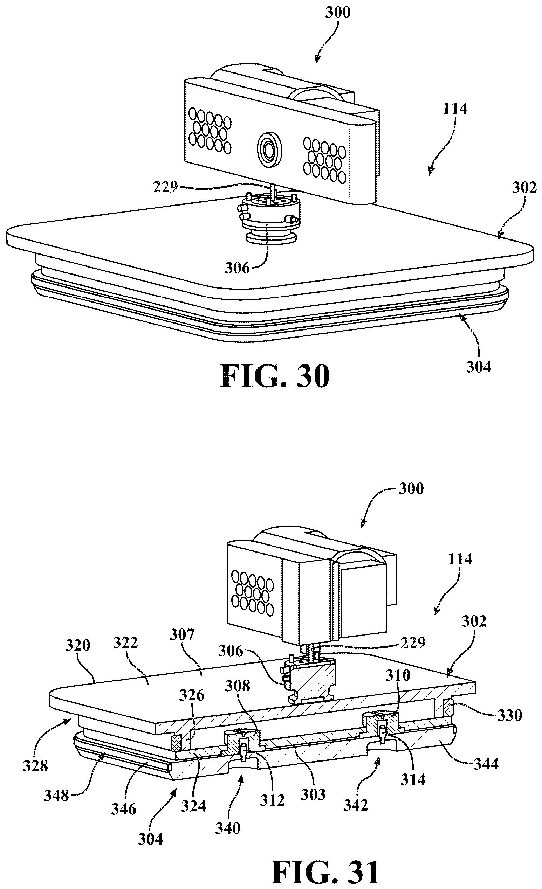

With reference to FIG. 13, the calibration box 1122 includes a top flange plate 1202. The top flange plate 1202 is fixed to the enclosure body 1200. As one example, the top flange plate 1202 and the enclosure body 1200, e.g., the top piece 1201, are, in certain non-limiting examples, monolithic. As another example, the top flange plate 1202 and the enclosure body 1200 are, in certain non-limiting examples, fixed to each other, e.g., via fasteners, etc. The top flange plate 1202 has an opening 1204 that extends about a perimeter of the enclosure body 1200. The top flange plate 1202 includes, in certain non-limiting examples, locating pin openings 1211 that receive locating pins to adjust a position of the calibration box 1122. The calibration box 1122 may include a box lid 304 that can selectively cover the opening 1204. For example, the box lid 304 and be removed and reinstalled with the lid management system 114, shown, e.g., in FIG. 30 and discussed in greater detail below.

The top flange plate 1202 includes, in certain non-limiting examples, detectable slugs 1209. The detectable slugs 1209 can be used for confirming a desired orientation of the calibration box 1122 relative to the process chamber floor 106. The slugs 1209 are, in certain non-limiting examples, a different material than the top flange plate 1202. For example, the top flange plate is, in certain non-limiting examples, aluminum and the slugs 1209 steel. The slugs 1209 are, in certain non-limiting examples, cylindrical or any suitable shape. The top flange plate 1202 includes, in certain non-limiting examples, openings 1211 at mirrored locations relative to the slugs 1209. The openings 1211, in certain non-limiting examples, increase variance in a signal from a sensor that faces the slugs 1209 when the calibration box 1122 abuts the process chamber floor 106 at the desired orientation, and faces the openings 1211 when the calibration box 1122 abuts the process chamber floor 106 at an improper orientation that is not the desired orientation.

A width (e.g., along the +/-X axis of the coordinate axes as depicted in the FIGS.) of the top flange plate 1202 of the calibration box 1122 is, in certain non-limiting examples, generally equal to a width of the top flange plate 202 of the build box 122. A length (e.g., along the +/-Y axis of the coordinate axes as depicted in the FIGS.) of the top flange plate 1202 of the calibration box 1122 is, in certain non-limiting examples, generally equal to a length of the top flange plate 202 of the build box 122. A size and shape of the opening 1204 of the top flange 1202 of the calibration box 1122 is, in certain non-limiting examples, generally equal to a size and shape of the opening 204 of the top flange plate 202 of the build box 122.

The top flange plate 1202, in certain non-limiting examples, is utilized to move the calibration box into, or out of, the box management system. For example, forks of a forklift (not shown) are, in certain non-limiting examples, engaged with the top flange plate 1202 on opposite sides of the enclosure body 1200 and under the top flange plate 1202. Lifting of the forks, in certain non-limiting examples, lifts the top flange plate 1202 and a remainder of the calibration box 1122 therewith.

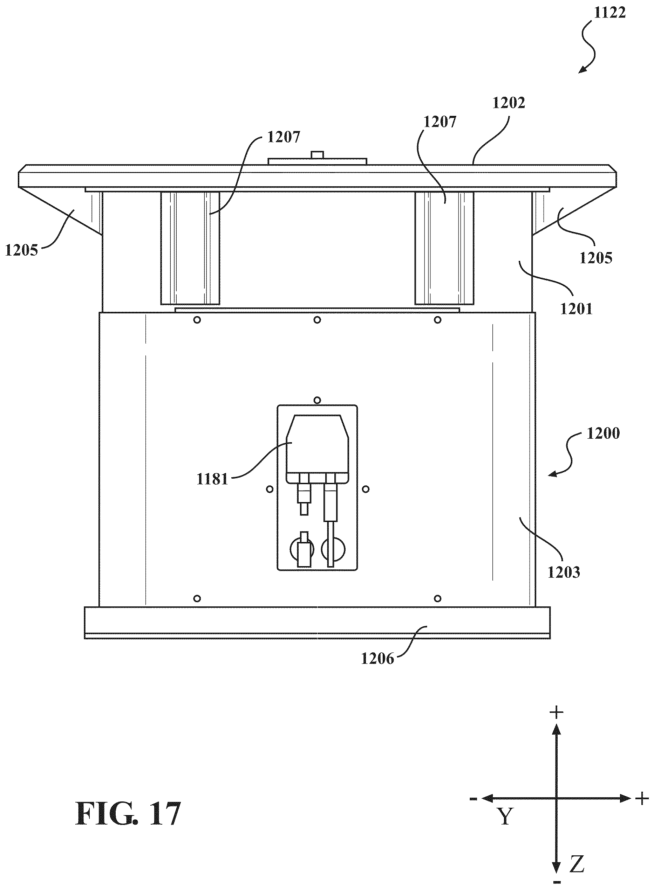

The calibration box 1122 includes, in certain non-limiting examples, blocking structures 1205 (FIGS. 13, 17 and 18), e.g., that prevent forks of a forklift from engaging the bottom surface to the top flange plate 1202. The blocking structures are, in certain non-limiting examples, at opposing, e.g., front and rear sides, of enclosure body 1200 (e.g., along the +/- Y-axis in the FIGS.) and inhibit forks of a forklift from engaging the top flange plate 1202 from the right side and the left side of the calibration box 1122. The blocking structures 1205, in certain non-limiting examples, extend outward, e.g., forward and rearward (e.g., along the +/- Y-axis in the FIGS.), from the enclosure body 1200. The blocking structures 1205, in certain non-limiting examples, extend downward from the bottom surface of the top flange plate 1202. The blocking structures 1205 are, in certain non-limiting examples, webs that extend from an outer surface of the enclosure body 1200 to a bottom surface of the top flange plate 1202. The blocking structures 1205 are, in certain non-limiting examples, a generally triangular shape, or are, in certain non-limiting examples, any other suitable shape that prevents engagement, e.g., by forks of a forklift, by the box management system, etc., with the top flange plate 1202 of the calibration box 1122, e.g., at the front and rear sides of the enclosure body 1200. The blocking structures 1205, the enclosure body 1200, e.g., the top piece 1202, and/or the top flange plate 1202 are, in certain non-limiting examples, monolithic. The block structures 1205 are, in certain non-limiting examples, fixed to the enclosure body 1200 and/or the top flange plate 1202, e.g., via weld, fastener, or other suitable structure. Other sides of the enclosure body 1200, e.g., right and left sides, are, in certain non-limiting examples, free of having blocking structures 1205 and thereby permit engagement with the top flange plate 1202 of the calibration box 1122 at the right and left sides of the enclosure body 1200, e.g., by forks of a forklift, by the box management system, etc.

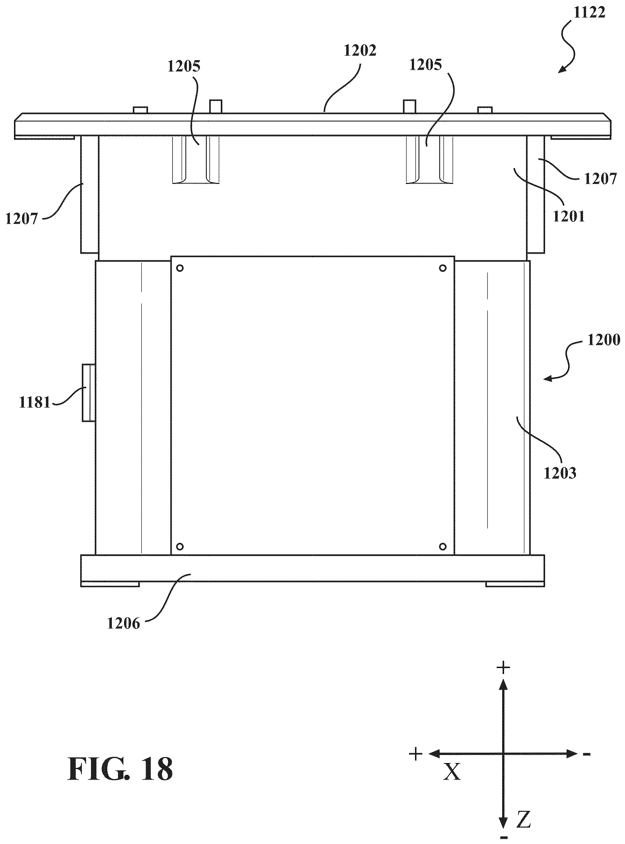

The calibration box 1122 includes, in certain non-limiting examples, one or more guides 1207 (FIGS. 13 and 18). The guides 1207, in certain non-limiting examples, protect the enclosure body 1200, e.g., from forks of a forklift, and, in certain non-limiting examples, guide the forks along sides of the enclosure body 1200. The guides 1207, in certain non-limiting examples, extend outward, e.g., to the right and to the left, from the enclosure body 1200. The guides 1207, in certain non-limiting examples, extend downward from the bottom surface of the top flange plate 1202. The guides 1207, the enclosure body 1200, e.g., the top piece 1201, and/or the top flange plate 1202 are, in certain non-limiting examples, monolithic. The guides 1207 are, in certain non-limiting examples, fixed to the enclosure body 1200 and/or the top flange plate 1202, e.g., via weld, fastener, or other suitable structure. The block structures 1205, in certain non-limiting examples, extend further from the enclosure body 1200 than the guides 1207. Said another way, the block structures 1205, in certain non-limiting examples, extend from the enclosure body 1200 by a first distance, and the guides 1207, in certain non-limiting examples, extend from the enclosure body by a second distance that is less than the first distance.

The top flange plate 1202 is fixedly mounted to a bottom flange plate 1206. As one example, the top flange plate 1202 is, in certain non-limiting examples, fixedly mounted to the bottom flange plate 1206 via the enclosure body 1200. In such example, the bottom flange plate 1206 is, in certain non-limiting examples, fixed to the bottom piece 1203 via fasteners or the like. As another example, the top flange plate 1202 is, in certain non-limiting examples, fixedly mounted to the bottom flange plate 1206 by one or more support columns (e.g., as shown and described for the build box 122). While the top flange plate 1202 extends about the periphery of the enclosure body 1200, the bottom flange plate 1206 has a step that receives a bottom edge of the enclosure body 1200. In this regard, the bottom flange plate 1206 supports the enclosure body 1200 thereupon and holds the enclosure body 1200 between the top flange plate 1202 and the bottom flange plate 1206. The bottom flange plate 1206 also has an opening 1214 that extends there through to the sensor platform 1144. A width (e.g., along the +/-X axis of the coordinate axes as depicted in the FIGS.) of the bottom flange plate 1206 of the calibration box 1122 is, in certain non-limiting examples, generally equal to a width of the bottom flange plate 206 of the build box 122. A length (e.g., along the +/-Y axis of the coordinate axes as depicted in the FIGS.) of the bottom flange plate 1206 of the calibration box 1122 is, in certain non-limiting examples, generally equal to a length of the bottom flange plate 206 of the build box 122. A size and shape of the opening 1214 of the bottom flange plate 1206 of the calibration box 1122 are, in certain non-limiting examples, generally equal to a size and shape of the opening 214 of the bottom flange plate 206 of the build box 122.

With reference to FIG. 16, the calibration box 1122 may include one or more wear plates 1215 for protecting the bottom flange plate 1206, e.g., from wear during use of the calibration box 1122. The wear plates 1215 are, in certain non-limiting examples, releasably secured to a bottom surface of the bottom flange plate 1206 such that the wear plates 1215 can be removed and replaced without damaging the calibration box 1122, e.g., with threaded fasteners or the like. The wear plates 1215 are, in certain non-limiting examples, elongated along the longitudinal direction. In other words, the wear plates 1215 are, in certain non-limiting examples, extend longer along the longitudinal direction than along the lateral direction and the vertical direction. A pair of wear plates 1215 are, in certain non-limiting examples, secured on opposing sides of the opening 1214 of the bottom flange plate. For example and without limitation, two wear plates 1215 are, in certain non-limiting examples, disposed on a right side of the opening 1214 and two wear plates 1215 are, in certain non-limiting examples, disposed on a left side of the opening 1214. The wear plates are, in certain non-limiting examples, polytetrafluoroethylene (PTFE)(along know as Teflon^{®}), nylon, steel, or other suitable material.

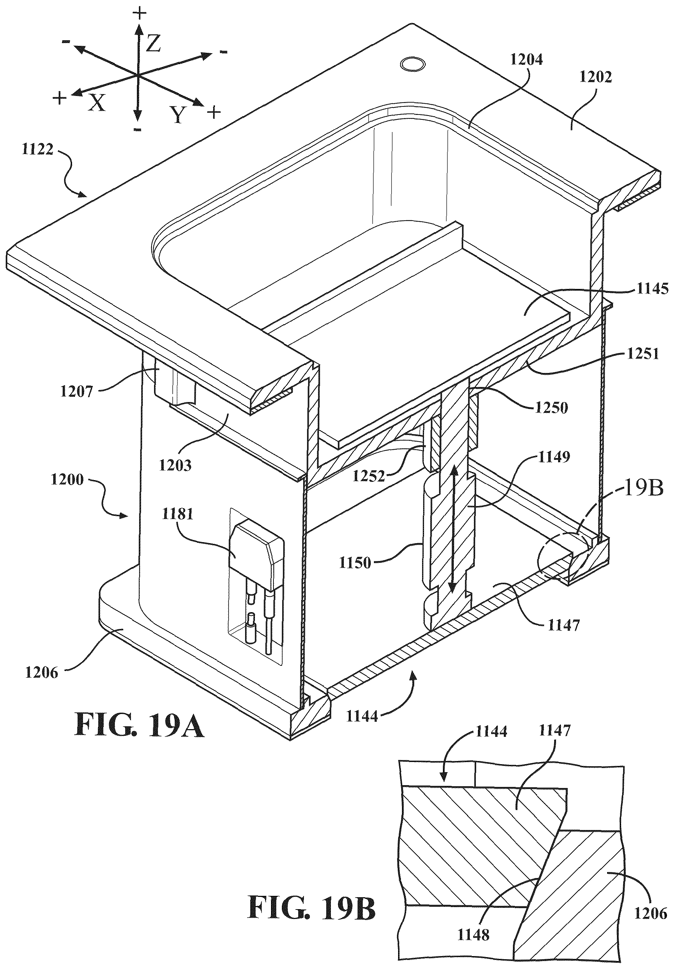

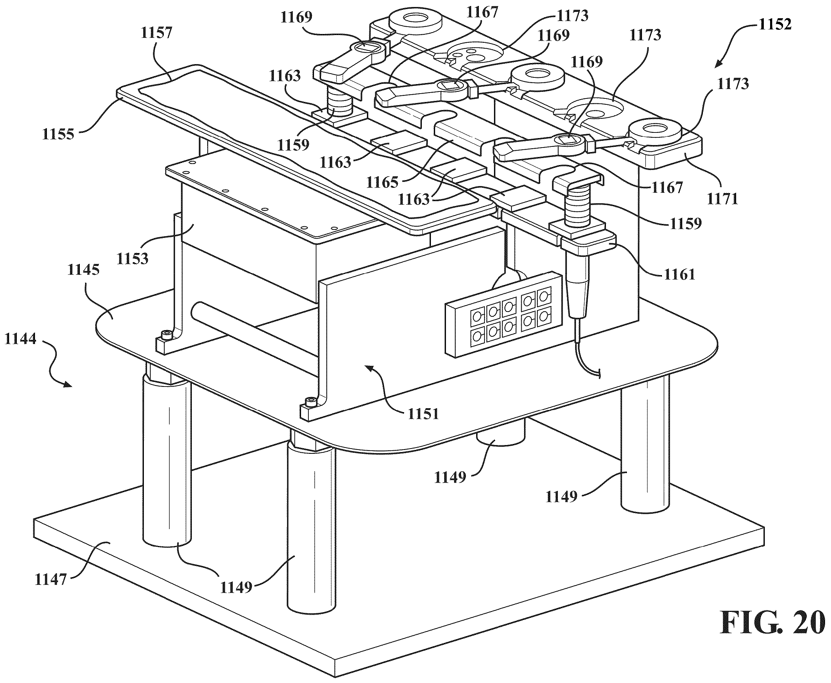

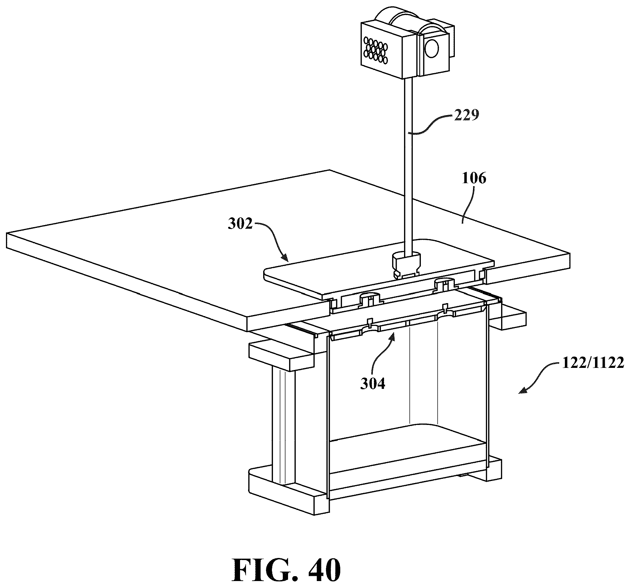

With reference to FIGS. 19A and 20, the sensor platform 1144 is included in the calibration box 1122 to support a sensor assembly 1152 (shown, e.g., in FIG. 20) that includes one or more sensors 1153, 1159, 1169 within the enclosure body 1200. For ease of illustration, the sensor assembly 1152 is not shown in certain of the FIGS., such as FIGS. 6-8, 19A and 34-40. The sensor platform 1144, in certain examples, directly abuts the enclosure body. In other words, the sensor platform 1144 is in contact with the enclosure body 1200 without intervening components, e.g., a seal, a brush, etc., there between. The sensor platform 1144 is vertically movable within the enclosure body 1200. For example, the sensor platform 1144, in certain non-limiting examples, rests on the bottom flange plate 1206, and is, in certain non-limiting examples, slidable in the vertical direction relative to the enclosure body 1200 by the lift platform assembly 136, 180.

In the example shown in FIGS. 19A and 20, the sensor platform 1144 includes a top plate 1145 and a bottom plate 1147. The top plate 1145 is, in certain non-limiting examples, connected to the bottom plate 1147, e.g., via one or more standoffs 1149. The top plate 1145 is, in certain non-limiting examples, fixed to top distal ends of the standoffs 1149 and the bottom plate 1147 is, in certain non-limiting examples, fixed to bottom distal ends of the standoffs 1149. The sensor platform 1144 may include a single standoff 1149 (FIG. 19A) or multiple standoffs 1149 (FIG. 20). The one or more standoffs 1149 may extend through one or more openings 1250 in a bottom wall 1251 of the bottom piece 1203 of the enclosure body 1200 (FIG. 19A), e.g., such that the bottom wall 1251 is between the top plate 1145 and the bottom plate 1147. The one or more standoffs 1149 may be slidable within the one or more openings 1250 of the bottom wall 1251. The standoff 1149 may include a stop 1150 having a larger diameter than the opening 1250. The stop can abut a cylinder 1252 extending downward from the bottom wall 1251 to limit upward movement of the sensor platform 1144. Alternately, the sensor platform 1144 is, in certain non-limiting examples, a single plate, multiple plates stacked on top of each other, or the like. In such certain of the FIGS., a simplified illustration of the sensor platform 1144 is provided, e.g., without showing the top plate 1145 and the bottom plate 1147. It is to be understood that the teachings herein, e.g., and shown in FIGS. 19A and 20, can be applied to such certain of the FIGS.

With reference to FIG. 19B, the sensor platform 1144, e.g., the bottom plate 1147 of the sensor platform 1144, may include a tapered perimeter surface 1148 that tapers inward in a downward direction. The tapered perimeter surface 1148 may help prevent the sensor platform 1144 from sticking to the bottom flange plate 1206 and enable the sensor platform 1144 to be easily moved vertically away from the bottom flange plate 1206. For example, the tapered perimeter surface 1148 may extend at an angle that is about 2 degrees away from vertical. Studs 1216 or other clamping features that interface with the lift platform assembly 136, 180 are, in certain non-limiting examples, included with the sensor platform 1144, as shown in FIG. 16.

The sensor assembly 1152 supported within the enclosure body is included to collect data regarding the operation of the manufacturing apparatus 10. The data collected with the sensor assembly 1152 is, in certain non-limiting examples, used to calibrate and/or otherwise maintain operation of the manufacturing apparatus 10. The sensor assembly 1152 is supported by the sensor platform 1144, e.g., such that weights of the sensors 1153, 1159, 1169 are borne by the sensor platform 1144. For example and without limitation, a base 1151 of the sensor assembly 1152 is, in certain non-limiting examples, fixed to the top plate 1145, and the sensor assembly 1152 is, in certain non-limiting examples, fixed to, or otherwise connected to, the base 1151.

With reference to FIG. 20, the sensor assembly 1152 of the calibration box 1122 may include a load cell 1153. The load cell 1153 measures a force, such as compression or pressure, and outputs an electrical signal indicative of a magnitude of the force. As the force applied to the load cell 1153 increases, the signal changes proportionally. The load cell 1153 includes, in certain non-limiting examples, a strain gauge or the like. The load cell 1153 is, in certain non-limiting examples, configured to measure material, such as binder material 54 and/or other jettable composition materials deposited by the printing assembly 20. For example, the load cell 1153, in certain non-limiting examples, can measure force at magnitudes and resolutions that correspond generally to the mass of the material deposited by the printing assembly 20 during operation and such that determinations can be made regarding adjusting parameters of the manufacturing apparatus 10 to output a desired amount of material by the printing assembly 20 and/or to determine functionality of the printing assembly 20, e.g., whether the printing assembly 20 and is outputting an expected amount of material, whether the printing assembly 20 needs to be cleaned, etc. The load cell 1153 includes, in certain non-limiting examples, a removable material plate 1155. The removable material plate 1155 is included to receive the material deposited by the printing assembly 20 and to enable easy cleanup of the deposited material, e.g., in preparation of obtaining subsequent measurement. The removable material plate 1155 is removable from the load cell 1153, e.g., without specialized tooling and without damaging the load cell 1153 or other components of the calibration box 1122. The removable material plate 1155 is, in certain non-limiting examples, held in place, e.g., via gravity, with a key and keyway structure or the like, with a clip, latch, or other manually operated fastener, with a magnetic coupling, and/or the like. An absorbent material 1157 is, in certain non-limiting examples, disposed on top of the load cell 1153. The absorbent material 1157 can absorb the material deposited by the printing assembly 20, e.g., such that generally all material dispensed by the printing assembly 20 is measured by the load cell 1153. The absorbent material 1157 is, in certain non-limiting examples, a sponge, a towel, a foam pad, or the like.

The sensor assembly 1152 of the calibration box 1122 may include one or more confocal lasers 1159. The confocal lasers 1159, in certain non-limiting examples, produce electronic information indicative of characteristics of a surface scanned with the confocal lasers 1159, e.g., indicating changes in surface height at a micrometer level. The confocal lasers 1159 are, for example and without limitation, laser scanning confocal microscopes and the like. The confocal lasers 1159 are, in certain non-limiting examples, configured to measure geometry of one or more rollers 19 or blades of the recoat assembly 18. The confocal lasers 1159 are, in certain non-limiting examples, oriented and positioned to detect a distance to outer surfaces of the rollers 19 or blades, e.g., to determine runout, a roundness, or other surface deviations at various magnitudes and resolutions. Information from the confocal lasers 1159 is, in certain non-limiting examples, used to determine functionality of the recoat assembly 18, e.g., whether rollers 19 or blades are capable to distribute build material within a certain tolerance or thickness, whether the rollers 19 or blades should be replaced, whether the rollers 19 should be cleaned, etc. Multiple confocal lasers 1159 are, in certain non-limiting examples, aligned along an axis, e.g., such that the multiple confocal lasers 1159 can simultaneously scan one of the rollers 19 or blades of the recoat assembly 18. The calibration box 1122 can include other physical measuring devices in place of the confocal lasers 1159 to measure geometry of one or more rollers 19 or blades of the recoat assembly 18, e.g., physical displacement sensors, contact probes, image recognition systems, and the like.

The confocal lasers 1159 are, in certain non-limiting examples, supported by a laser base 1161 of the sensor assembly 1152. The laser base 1161 is, in certain non-limiting examples, supported by the sensor platform 1144, e.g., fixed to the base 1151. The laser base 1161 is configured to support each of the one or more confocal lasers 1159 at one of a plurality of predetermined positions. For example, the laser base 1161 includes, in certain non-limiting examples, a plurality of laser mounts 1163 at the predetermined positions. The laser mounts 1163 are, in certain non-limiting examples, sized to receive the confocal lasers 1159. The confocal lasers 1159 are, in certain non-limiting examples, secured within the laser mounts 1163, e.g., via friction fit, snap fit, a fastener, etc. The laser mounts 1163 are, in certain non-limiting examples, arranged along an axis. The calibration box 1122 includes, in certain non-limiting examples, fewer confocal lasers 1159 than the laser base 1161 is configured to support. For example, the laser base 1161 includes, in certain non-limiting examples, more laser mounts 1163 than a number of confocal lasers 1159 included in calibration box 1122. The relatively higher number of laser mounts 1163 provides greater setup flexibility of the calibration box 1122, e.g., such that the confocal lasers 1159 are, in certain non-limiting examples, positioned based on a design of the recoat assembly 18.

A laser cover 1165 is, in certain non-limiting examples, included in the calibration box 1122, e.g., to protect the confocal lasers 1159. The laser cover 1165 is, in certain non-limiting examples, movable from a first position covering the confocal laser to a second position not covering the confocal laser. For example, the laser cover 1165 is, in certain non-limiting examples, slidably supported by the base, the laser base 1161, or the like. The laser cover 1165 includes, in certain non-limiting examples, a plurality of openings 1167. When the laser cover 1165 is at the first position, the openings 1167 are out of alignment with the laser mounts 1163, such that solid portions of the laser cover 1165 are positioned directly above the confocal lasers 1159 supported by the laser mounts 1163. When the laser cover 1165 is at the second position the openings 1167 are aligned with the laser mounts 1163, such that the openings 1167 of the laser cover 1165 are positioned directly above the confocal lasers 1159 supported by the laser mounts 1163 and the confocal lasers 1159 can collect data though the openings 1167.

The sensor assembly 1152 of the calibration box 1122 may include one or more power meters 1169. The power meters 1169 measure a power and/or intensity of detected electromagnetic radiation, e.g., in the infrared wavelength range, and outputs an electrical signal indicative of a magnitude of the power and/or intensity of the detected electromagnetic radiation. As the power and/or intensity of detected electromagnetic radiation applied increases, the signal, in certain non-limiting examples, changes proportionally. The power meters 1169 include, in certain non-limiting examples, thermal and/or photonic detectors. The power meters 1169 are configured to measure power output during operation of at least one of the SLS apparatus, the DMLS apparatus, the EBM apparatus, or the infrared heating source. For example, the power meters 1169, in certain non-limiting examples, measure radiation at frequencies, magnitudes and resolutions that correspond generally to the wavelength and/or intensity of the radiation emitted during SLS, DMLS, or EBM, and such that determinations can be made regarding adjusting parameters of the manufacturing apparatus 10 to output a desired amount of radiation and/or to determine functionality of the manufacturing apparatus 10, e.g., whether the manufacturing apparatus 10 is outputting an expected amount of radiation, etc.

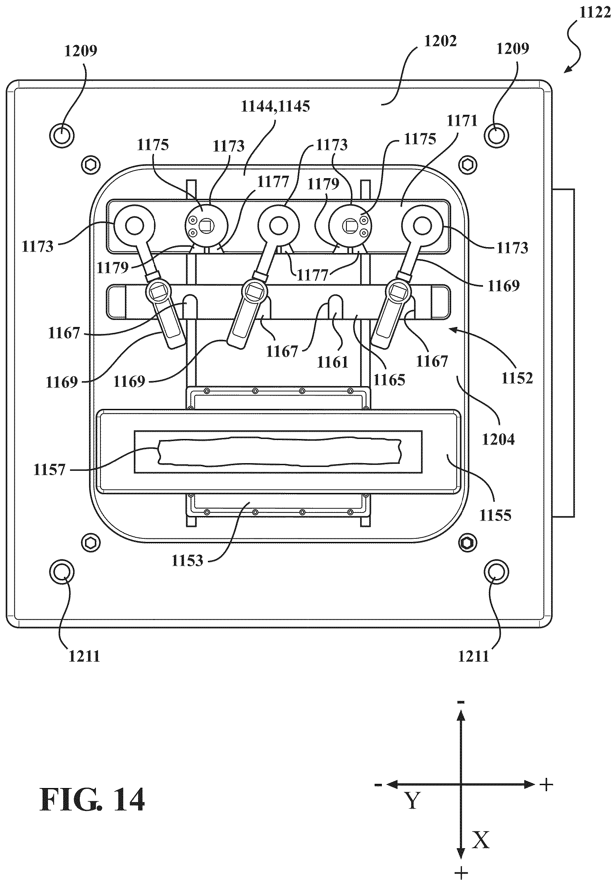

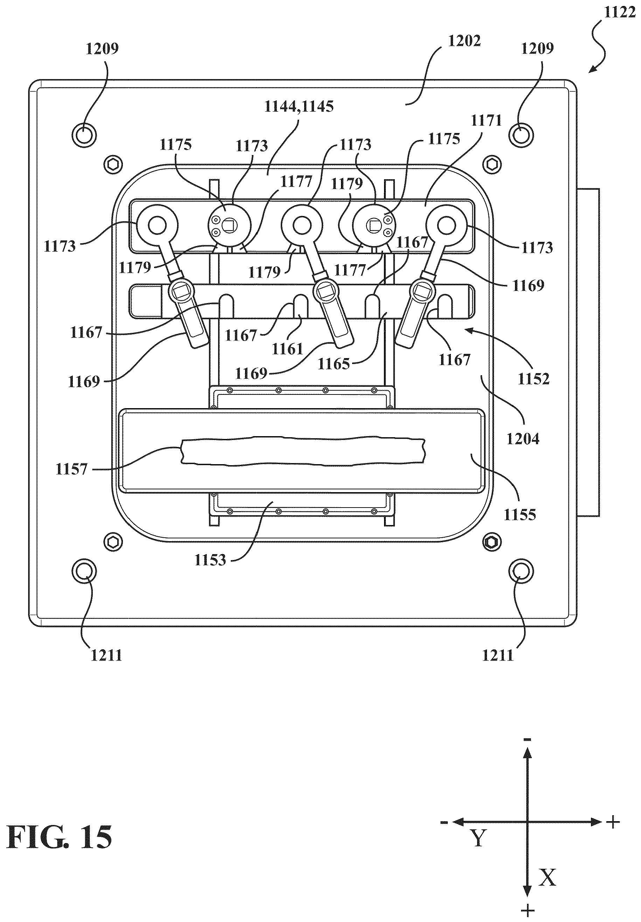

The power meters 1169 are, in certain non-limiting examples, supported by a power meter base 1171 of the sensor assembly 1152. The power meter base 1171 is, in certain non-limiting examples, supported by the sensor platform 1144, e.g., fixed to the base. The power meter base 1171 configured to support the power meters 1169 at a first predetermined position (see, e.g., center power meter 1169 as shown in FIG. 14) and at a predetermined second position (see, e.g., center power meter 1169 as shown in FIG. 15). For example, the power meter base 1171 configured to support the power meters 1169 only at the first predetermined position and at the predetermined second position, e.g., and not at any other position. For example, the power meter base 1171 includes, in certain non-limiting examples, a plurality of meter mounts 1173. The meter mounts 1173 are, in certain non-limiting examples, sized to receive the power meters 1169 at the first position or the second position. For example, each meter mount 1173 includes, in certain non-limiting examples, a main portion 1175, a first channel 1177, and a second channel 1179 (see FIGS. 14 and 15). The power meter 1169 at the first position, in certain non-limiting examples, occupies the main portion 1175 and the first channel 1177 and not the second channel 1179. The power meter 1169 at the second position, in certain non-limiting examples, occupies the main portion 1175 and the second channel 1179 and not the first channel 1177. The power meters 1169 are, in certain non-limiting examples, secured within the meter mounts 1173, e.g., via friction fit, snap fit, a fastener, etc. The meter mounts 1173 are, in certain non-limiting examples, arranged along an axis. The calibration box 1122 includes, in certain non-limiting examples, fewer power meters 1169 than the meter base is configured to support. For example, the meter base 1171 includes, in certain non-limiting examples, more meter mounts 1173 than a number of power meters 1169 included in calibration box 1122. The relatively higher number of meter mounts 1173 provides greater setup flexibility of the calibration box 1122. The power meters 1169 at the first position and at the second position are, in certain non-limiting examples, free from blocking the confocal lasers 1159. The power meters 1169 at the first position and at the second position are, in certain non-limiting examples, not directly above the laser mounts 1163.

The sensor assembly 1152 is, in certain non-limiting examples, accessible via the opening 1204 of the top flange plate 1202 (see FIGS. 14 and 15). In other words, the sensors 1153, 1159, 1169 themselves, and/or the modality of detection, can travel through the opening 1204 into, and/or out of, the enclosure body 1200. For example, the lift platform assembly 136, 180 lifts the sensor platform 1144 to raise the sensor assembly 1152, such as the load cell 1153, from within the enclosure body 1200 to at or above the opening 1204 of the top flange plate 1202. As another example, the sensor assembly 1152, such as the confocal lasers 1159, detect through the opening 1204. In such example, the laser detection beams of the confocal laser in the enclosure body 1200 travel through the opening 1204 to scan the roller 19 or blade.

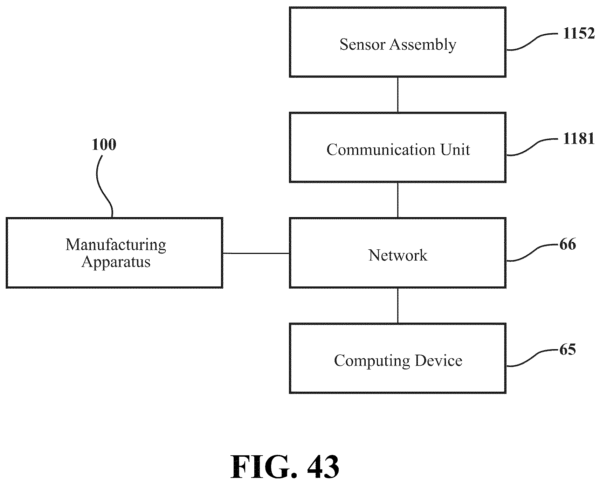

The calibration box 1122 includes, in certain non-limiting examples, a communication unit 1181 (FIG. 13) communicatively coupled to the sensor assembly 1152. The communication unit 1181 is configured to receive the and to transmit data collected by the sensor assembly 1152. The data is, in certain non-limiting examples, transmitted to the manufacturing apparatus 100, the computing device 65 (see FIG. 43), or the like. The data is, in certain non-limiting examples, used to set parameters for, and to determine functionality of, various components of the manufacturing apparatus 100, e.g., as described herein. The communication unit 1181, in certain non-limiting examples, communicatively couples the sensor assembly 1152 to the manufacturing apparatus 100, to the computing device 65, a server computer, and/or the like, e.g., via the network 66 (FIG. 43). The communication unit 1181 includes, in certain non-limiting examples, an antenna, a modem, LAN port, Wi-Fi card, NearFi, WiMax card, Bluetooth hardware, IrDA hardware, Wireless USB hardware, Z-Wave hardware, ZigBee hardware, mobile communications hardware, near-field communication hardware, satellite communication hardware, cellular network communication hardware, and/or any wired or wireless hardware for communicating with other networks and/or devices. The cellular network includes, for example, and without limitation, a Global System for Mobile Communications (GSM) network, a 3G Universal Mobile Telecommunications System (UMTS) network, a 4G Long Term Evolution (LTE) network, a 5G network, and the like. The calibration unit is, in certain non-limiting examples, supported by, e.g., fixed to, enclosure body 1200. The communication unit 1181 is, in certain non-limiting examples, external of the enclosure body 1200, e.g., fixed to an outer surface of the enclosure body 1200.

### Operation

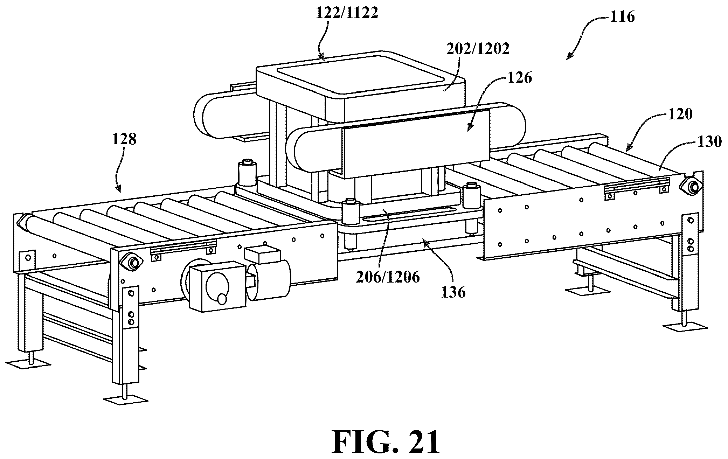

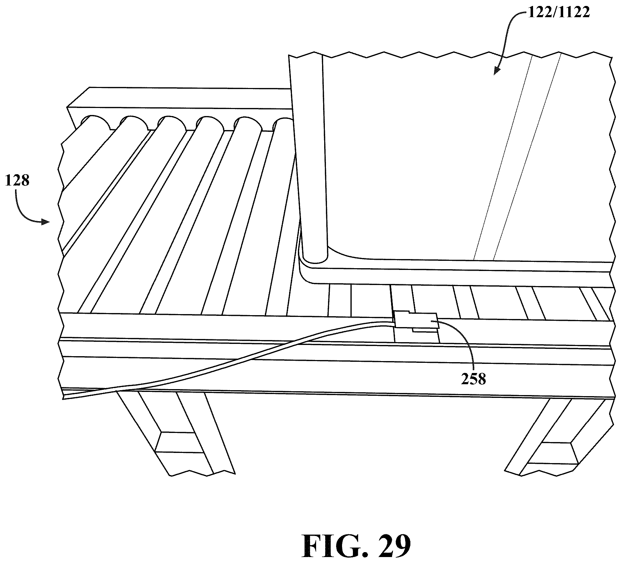

Referring to FIGS. 21-29, operation of the box management system 116 is described in greater detail. Referring first to FIG. 21, the build box 122 or calibration box 1122 is placed on the intake conveyor 120. As indicated above, the intake conveyor 120 is, in certain non-limiting examples, motor-driven, driving the rollers 130, which cause the build box 122 or calibration box 1122 to move toward the elevated conveyor 126 and the lift platform assembly 136, 180. The rollers 130 together define a conveying surface that engages, e.g., wear plates on the the bottom flange plate 206 of the build box 122 or the wear plates 1215 on the bottom flange plate 1206 of the calibration box 1122.

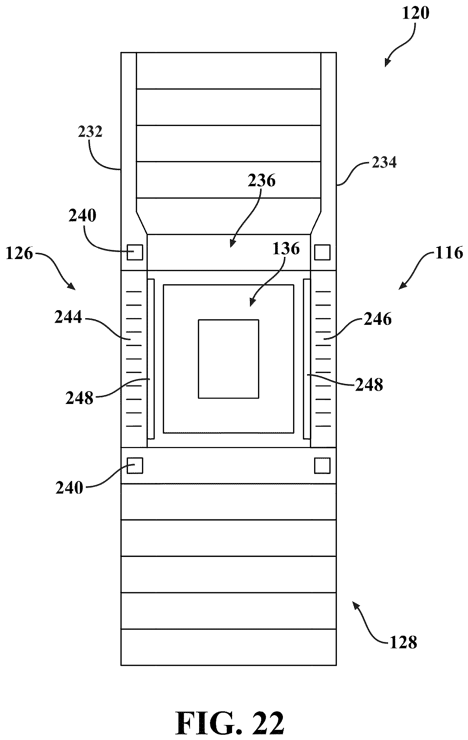

FIG. 22 illustrates a top view of the intake conveyor 120. The intake conveyor 120 includes opposite sides 232 and 234 that can be used to guide the build box 122 or calibration box 1122 as the build box moves toward the elevated conveyor 126. In some aspects, a distance between the sides 232 and 234 decreases, forming a slight necked-down region 236 that serves to align the build box 122 or calibration box 1122 both rotationally and in the cross-conveying direction so that opposite sides of the build box 122 or calibration box 1122 face the upstream and downstream conveying directions.

Returning to FIG. 21, the top flange plate 202, 1202 of the build box 122 or calibration box 1122 is engaged by the elevated conveyor 126 and transferred from the intake conveyor 120 onto the lift platform assembly 136, 180. The elevated conveyor 126 includes conveying elements, such as a drag chain or rollers that are at least partially elevated above the conveying surface provided by the intake conveyor 120. In this regard, the build box 122 or calibration box 1122 hangs from the elevated conveyor 126 by its top flange plate 202, 1202. Light curtains 240 or other proximity sensors are, in certain non-limiting examples, provided to detect the operator reaching into the build box lift area while the build box 122 or calibration box 1122 is being lifted onto and lowered from chain conveyors 244 and 246 and inhibit operation of the lift platform assembly 136, 180.

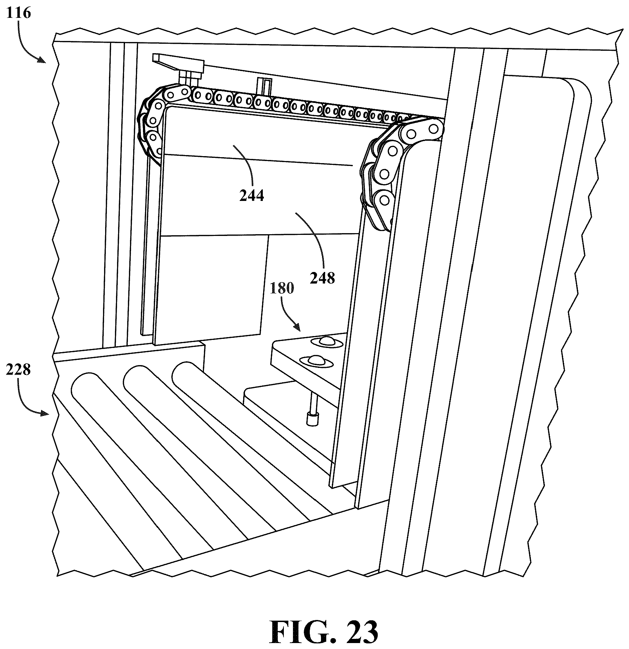

Referring briefly to FIG. 23, guide plates 248 are, in certain non-limiting examples, provided on both of the chain conveyors 244 and 246 that face one another to further decrease conveying width and to align the build box 122 or calibration box 1122 as the build box 122 or calibration box 1122 travels on the elevated conveyor 126. The guide plates 248 are, in certain non-limiting examples, formed from a low friction bearing material. The guide plates 248 finely adjust a position of the build box 122 or calibration box 1122.

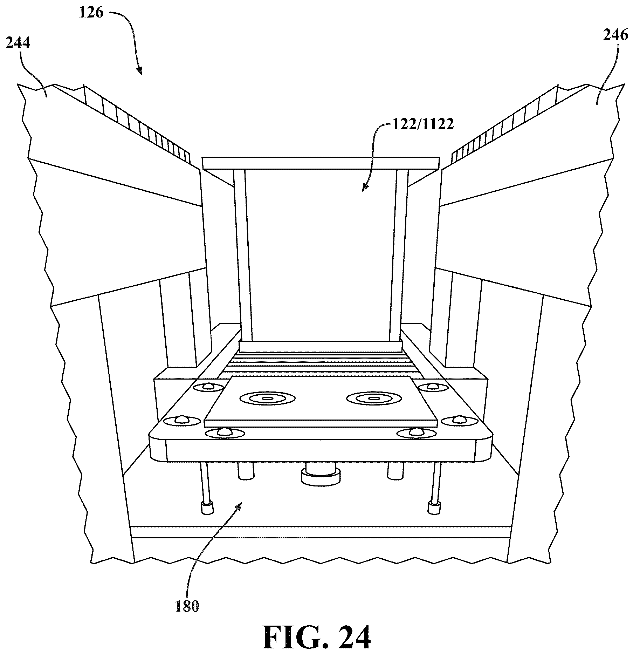

FIG. 24 illustrates the build box 122 or calibration box 1122 after exiting the elevated conveyor 126. The lift platform assembly 180 is located between the chain conveyors 244 and 246 and is in the lowered position when the build box 122 or calibration box 1122 is lifted onto and off of the chain conveyors 244 and 246.

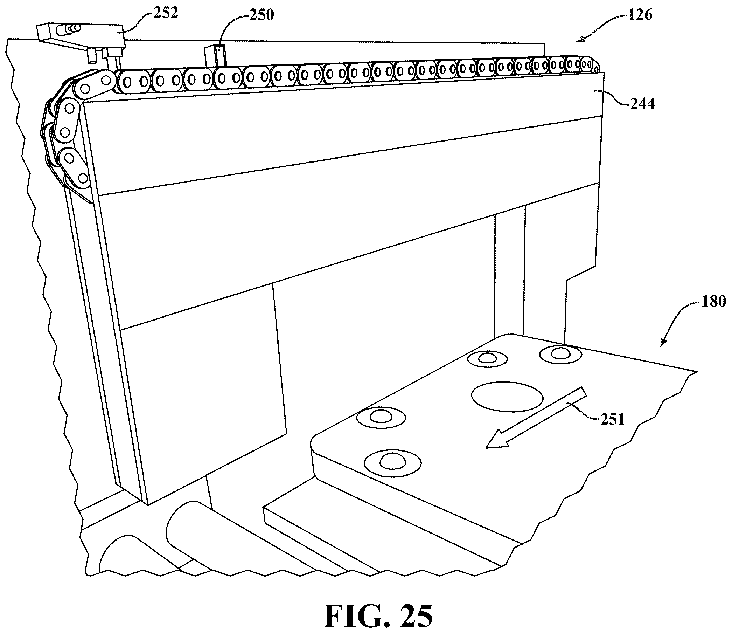

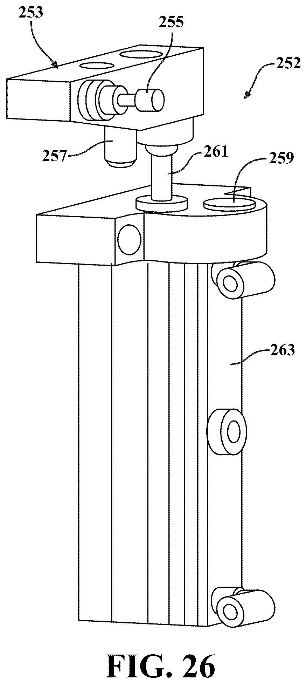

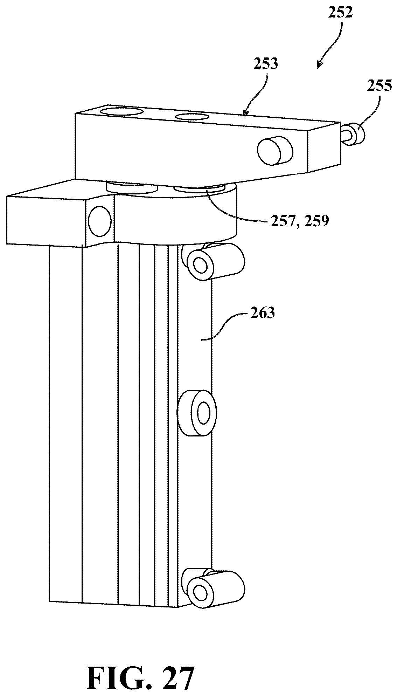

Referring to FIG. 25, as the build box 122 or calibration box 1122 is moved over the lift platform assembly 180 in the conveying direction represented by arrow 251, a proximity sensor 250 detects presence of the build box 122 or calibration box 1122 and provides a signal to the controller of the control system that slows the chain conveyors 244 and 246 and brings the build box 122 or calibration box 1122 to a stop over the lift platform assembly 180. A pneumatically-actuated hard stop 252 is, in certain non-limiting examples, used to stop the build box 122 or calibration box 1122 at the desired location. Each chain conveyor 244 and 246 has, in certain non-limiting examples, a hard stop 252. It should be noted that the conveying direction can be reversed by relocating the hard stops 252 to the opposite end of the elevated conveyor 126. Referring to FIGS. 26 and 27, the hard stops 252 are, in certain non-limiting examples, actuated (e.g., turned) into a stop position to precisely stop the build box 122 or calibration box 1122 at the desired location. In particular, the hard stops 252 include a stop arm 253 with a stop member 255 that extend outward from the stop arm 253. The stop arm 253 pivots with an actuation rod 261 that is driven by a pneumatic cylinder 263. When the actuation rod 261 rotates, the actuation rod 261 also retracts into the cylinder 263. A reinforced pin 257 is provided on the stop arm 253 that is received by a bushing 259 in the stop position as shown by FIG. 26. In the stop position, the hard stops 252 clamp onto the build box 122 or calibration box 1122 providing a hard stop and then swing out to the illustrated open position to allow the build box 122 or calibration box 1122 to be conveyed off of the elevated conveyor 126.

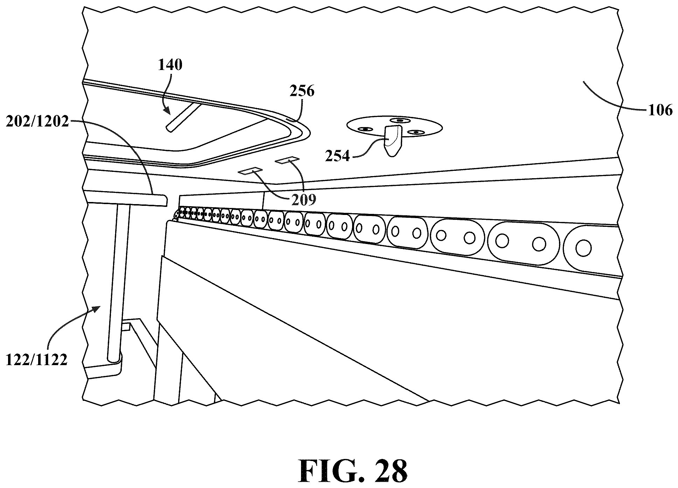

Referring to FIG. 28 in some aspects, one or more locating pins 254 (e.g., two or four) are, in certain non-limiting examples, provided at the underside of the process chamber floor 106 to further align the build box 122 or calibration box 1122 as the build box is raised against the process chamber floor 106. The locating pins 254 are, in certain non-limiting examples, received within locating pin openings 211, 1211 that are provided in the top flange plate 202, 1202 of the build box 122 or the calibration box 1122. The locations of the locating pins 254 are fixed to align the build box 122 or calibration box 1122 as it is raised. Additionally, one or more sensors 209 are, in certain non-limiting examples, supported by the apparatus or the box management system and configured to detect the slugs 1209 of the calibration box 1122 when the calibration box 1122 is in a desired orientation and raised against the process chamber floor 106. The sensors 209 are, in certain non-limiting examples, Hall Effect sensors, or any suitable sensor capable of generating an electrical signal indicating detection of the slugs 1209 (shown in FIG. 13).

FIG. 28 also shows the opening 140 in the process chamber floor 106. A seal 256 is, in certain non-limiting examples, provided around an outer perimeter of the opening 140 to provide a gas-tight seal with the build box 122 or calibration box 1122 when lifted and held thereagainst. Referring briefly to FIG. 28, another proximity sensor 258 is, in certain non-limiting examples, provided on the outfeed conveyor 128 to detect the presence of the build box 122 or calibration box 1122 and provide a signal to the control system.

### Lid Management System

Referring again to FIG. 4, as pointed out above, the opening 140 in the process chamber floor 106 has a shape (e.g., rectangular, such as square) that corresponds to a horizontal cross-sectional shape of the build box 122 or calibration box 1122. A size of the opening 140 is, in certain non-limiting examples, smaller than an outer perimeter of the top flange plate 202, 1202 (FIGS. 10 and 11A) of the build box 122 or calibration box 1122 to allow the build box 122 or calibration box 1122 to seal against the underside of the process chamber floor 106 and around the opening 140 as the build box 122 or calibration box 1122 is raised toward the opening 140. The lift platform assembly 136, in certain non-limiting examples, lifts the build box 122 or calibration box 1122 toward the opening 140 and to the opening 140 for a build operation. As one example, the opening 204 of the top flange plate 202, 1202 is, in certain non-limiting examples, about 512 mm x 512 mm, the opening 140 of the process chamber floor 106 is, in certain non-limiting examples, about 518 mm x 518 mm and the build platform 144 and the sensor platform, in certain non-limiting examples, are each about 510 mm x 510 mm. Other larger or smaller sizes are possible depending, at least in part, on the desired build area size.

The lid management system 114 includes actuator 300 that can be used to move a machine lid 302 toward and away from the process chamber floor 106. The machine lid 302 is sized and shaped to mate with the perimeter of the opening 140 of the process chamber floor 106. The machine lid 302 includes a seal 330 that can seal against the perimeter of the opening 140 in order to provide an air-tight seal. The machine lid 302 is, in certain non-limiting examples, used to clamp onto the box lid 304 for removing the box lid 304 of the build box 122 or the calibration box 1122, as will be described in greater detail below. In FIG. 4, the box lid 304 is shown removed from the build box 122 or calibration box 1122 by the lid management system 114.

Referring now to FIGS. 30 and 31, the lid management system 114 is illustrated in greater detail including the actuator 300 and machine lid 302. In the example of FIG. 30, the box lid 304 is illustrated connected to the machine lid 302 after the box lid 304 is removed from the build box 122 or calibration box 1122 using the machine lid 302. The actuator 300 is any suitable actuator, such as a zip chain actuator that can retract or deploy a chain 229 connected to the machine lid 302. The actuator 300 includes, in certain non-limiting examples, a zip chain that connects to a connector 306. The connector 306 is, in certain non-limiting examples, a compliance device that automatically allows for some X-Y positioning deviations between the chain and the connector 306 when connecting together. The connector 306 is, in certain non-limiting examples, mounted to the machine lid 302 using any suitable method, such as welding, fastening, etc.

FIG. 31 shows an exemplary machine lid 302 for illustrative purposes. Referring to FIG. 31, on a face 303 of the machine lid 302 that is opposite face 307 are one or more clamp devices 308 and 310. The clamp devices 308 and 310 are, in certain non-limiting examples, powered, such as using pneumatic, hydraulic power, electric power, etc. The clamp devices 308 and 310 are, in certain non-limiting examples, for example, commercially available from Jergens, Inc. of Cleveland, OH. The clamp devices 308 and 310 clamp onto studs 312 and 314, such as also available from Jergens, Inc, that are mounted to the box lid 304. In some aspects, the clamp devices 308 and 310 are normally closed to inhibit an unintended release of the studs 312 and 314 and the box lid 304, for example, due to an issue with the pneumatic system. While two studs 312 and 314 are shown, any number of suitable studs are, in certain non-limiting examples, used, such as four to allow for multiple clamping and build box 122 or calibration box 1122 orientations.

The machine lid 302 is, in certain non-limiting examples, formed of multiple plates to form a machine lid body 320. The machine lid body 320 includes an upper plate 322 that faces the process chamber 110 and a lower plate 324 that faces away from the process chamber 110. In the illustrated aspect, the upper plate 322 includes an intermediate wall 326 that extends toward the lower plate 324 forming a volume between the upper and lower plates 322 and 324. In other aspects, the machine lid is, in certain non-limiting examples, a solid, monolithic piece of material. In some aspects, the lower plate 324 includes, in certain non-limiting examples, the wall 326. Both the upper plate 322 and the lower plate 324 extend outwardly beyond the wall 326 thereby forming a recess 328 therebetween that extends about an entire periphery of the machine lid body 320.

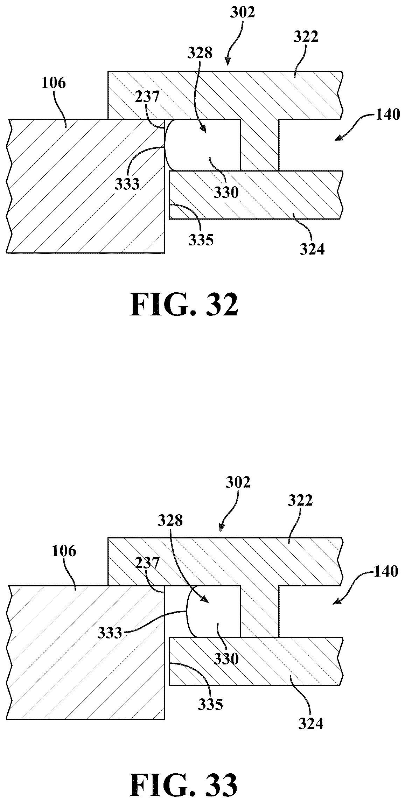

Referring briefly to FIGS. 31-33, a seal 330 is, in certain non-limiting examples, located in the recess 328. The seal 330 has, in certain non-limiting examples, an inflated configuration (FIG. 32) and a deflated configuration (FIG. 33), or the seal, in certain non-limiting examples, is not inflatable. Referring particularly to FIG. 32, in the inflated configuration, an outer perimeter 333 of the seal 330 is located outside of an outer perimeter 335 of the lower plate 324 in order to seal against the perimeter 237 of the opening 140 of the process chamber floor 106 providing a gas-tight seal. Referring to FIG. 33, in the deflated configuration, the outer perimeter 333 of the seal 330 is, in certain non-limiting examples, retracted from the perimeter 237 of the opening 140 to facilitate removal of the machine lid 302 and box lid 304 from the opening 140, exposing the build platform 144 or sensor assembly 1152.

Referring back to FIG. 31, the box lid 304 is, in certain non-limiting examples, formed as a single, monolithic piece of material, such as aluminum. In other aspects, the box lid 304 is, in certain non-limiting examples, formed of multiple plates or pieces. In some aspects, the box lid 304 includes openings 340 and 342 that provide regions of reduced thickness so that the studs 312 and 314 can be accessed from outer face 344, e.g., to remove and replace the studs 312 and 314. The box lid 304, in certain non-limiting examples, includes a seal 346 that extends about an entire periphery of the box lid 304. The seal 346 is, in certain non-limiting examples, located within a recess 348. The seal 346 is inflatable or not inflatable. Multiple seals are, in certain non-limiting examples, used. Other components are, in certain non-limiting examples, added, such as a brush that extends about the box lid 304 in a fashion similar to seal 346, the brush used to displace powder clinging around the opening or the build box 122 or calibration box 1122. In the illustrated example, the seal 346 is solid (e.g., formed of a silicone foam with a round profile) and not inflatable and provides a powder-tight seal with the build box 122 or calibration box 1122, e.g., to inhibit loose powder from escaping out of the build box 122 after a build process. An O-ring is, in certain non-limiting examples, used as the seal 346. The perimeter of the box lid 304 is, in certain non-limiting examples, chamfered and interlocks with a corresponding chamfer of the build box 122 or calibration box 1122. Such a chamfered arrangement can be used to register the box lid 304 with the build box 122 or calibration box 1122.

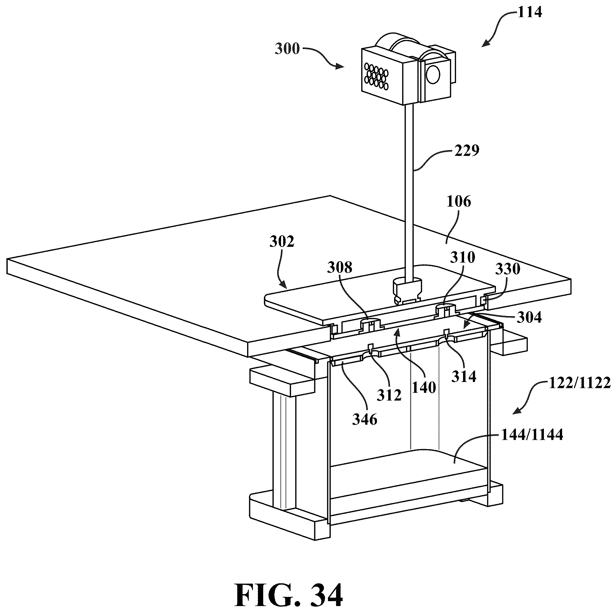

In FIGS. 34-39, operation of the lid management system 114 with operation of the box management system (not shown) is illustrated. Referring first to FIG. 34, the build box 122 or calibration box 1122 is illustrated in a lowered position where the build box 122 or calibration box 1122 is located on the lift platform assembly 136. In the lowered position, there is a gap between the build box 122 or calibration box 1122 and the process chamber floor 106. The gap includes, in certain non-limiting examples, air as it is exposed to the surroundings. To inhibit entry of air into the process chamber 110, the machine lid 302 is mated and sealed against the perimeter of the opening 140 of the process chamber floor 106 using the seal 330 that is in the inflated configuration.

The box lid 304 is mated with an inner perimeter of the build box 122 or calibration box 1122 using the seal 346. It should be noted that the seal against the build box 122 or calibration box 1122 is gas-tight or is not gas-tight, but is powder-tight, e.g., to prevent powder from exiting the build box 122 unintentionally. The box lid 304 includes the studs 312 and 314 that mate with the clamp devices 308 and 310 as the build box 122 or calibration box 1122 is raised by the lift platform assembly 136.

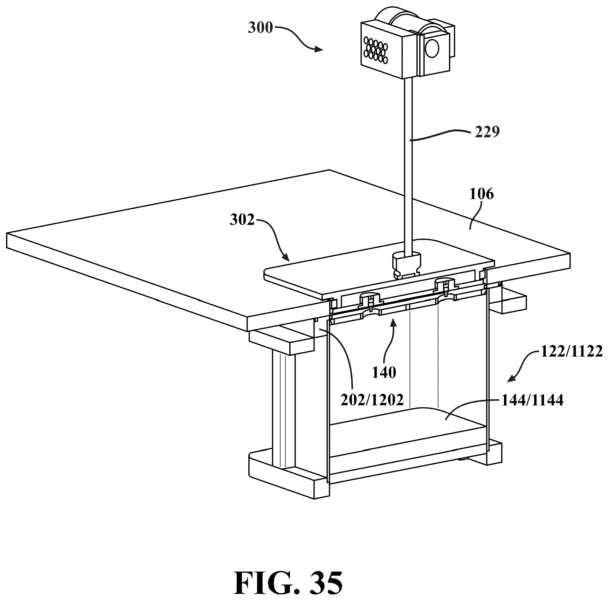

Referring to FIG. 35, the build box 122 or calibration box 1122 is shown in a lifted position where the top flange plate 202, 1202 is sealed against an underside of the process chamber floor 106. The underside of the process chamber floor 106 includes, in certain non-limiting examples, the seal 256 (FIG. 18) that faces the top flange plate 202, 1202 to form a seal about the opening 140 once the build box 122 or calibration box 1122 is raised. Because the build box 122 or calibration box 1122 is, in certain non-limiting examples, not gas-tight and has, in certain non-limiting examples, air therein, the machine lid 302 remains in the lowered position, sealed against the process chamber floor 106 to inhibit air from the build box 122 or calibration box 1122 entering the process chamber 110.

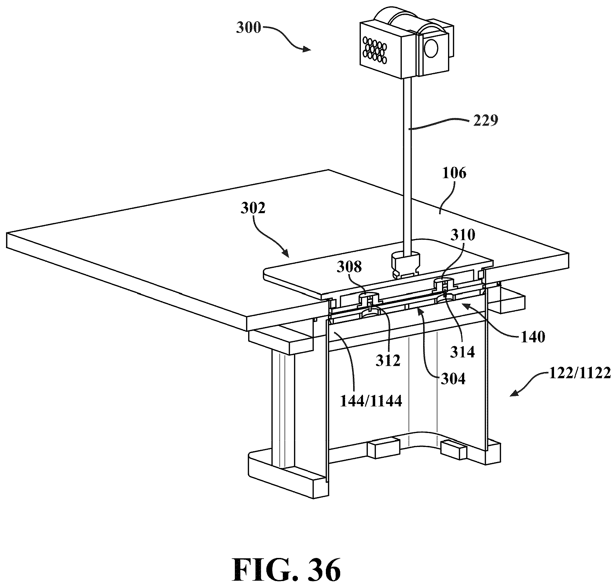

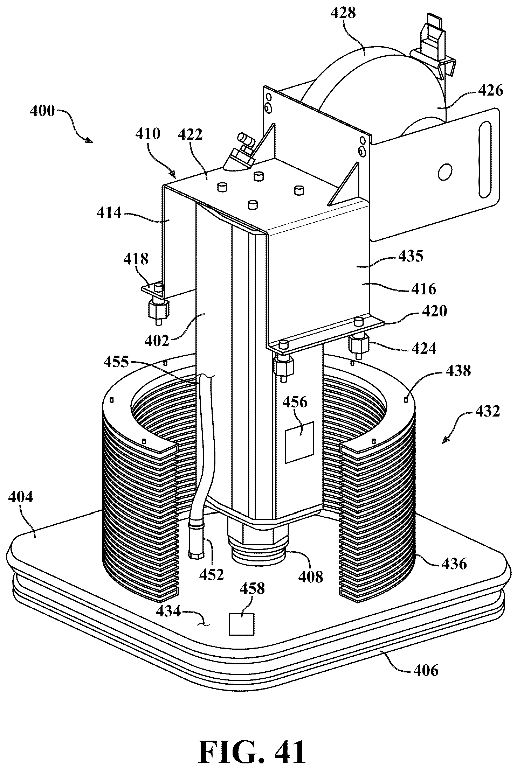

As can be seen from FIGS. 34 and 35, the build platform 144 or sensor platform 1144, in certain non-limiting examples, is initially located at the bottom of the build box 122 or calibration box 1122. Referring to FIG. 36, the lift platform assembly 136 lifts the build platform 144 or sensor platform 1144 toward the box lid 304 while the box lid 304 is mated with the build box 122 or calibration box 1122. In this regard, the build platform 144 or sensor platform 1144, in certain non-limiting examples, acts as a positive displacement pump thereby forcing air out of the build box 122 or calibration box 1122, through one or more check valves (not shown) in the box lid 304 and into an air vent system. In some examples, the air vent system may induce negative pressure to remove air from the build box 122 or calibration box 1122. The vent system is connected to an air vent that vents the air out of the process chamber 110 and to the surroundings. In some aspects, a filter is, in certain non-limiting examples, provided through which the air passes before the air is vented to the surroundings. As noted above, a bellows is, in certain non-limiting examples, used to surround the vent system to seal the air from the inert environment. The use of the bellows will be described in greater detail with regard to FIG. 41.

As the build platform 144 or sensor platform 1144 is raised toward the opening 140 in the process chamber floor 106, the build platform 144, sensor platform 1144, or object supported thereon engages the box lid 304. The build platform 144, sensor platform 1144, or object supported thereon then lifts the box lid 304 to register with the machine lid 302. As the box lid 304 is raised, the clamp devices 308 and 310 engage the studs 312 and 314 locking the box lid 304 and the machine lid 302 together face-to-face. The machine lid 302 remains in the lowered position, sealed against the process chamber floor 106 and the air in build box 122 is evacuated.

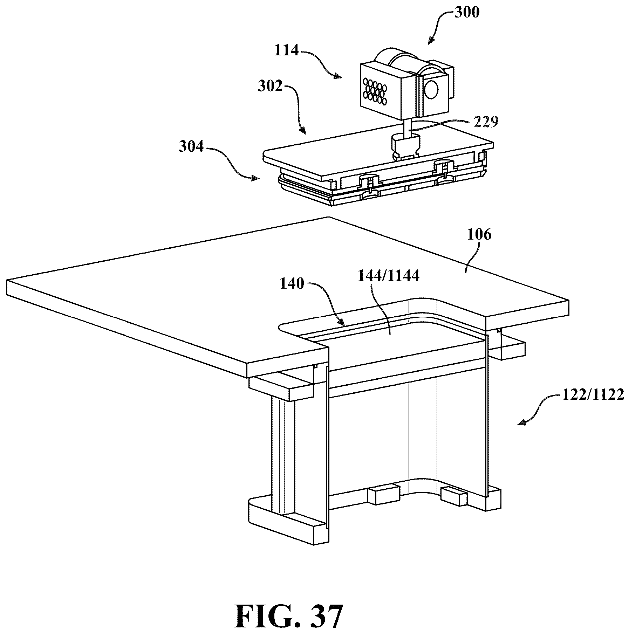

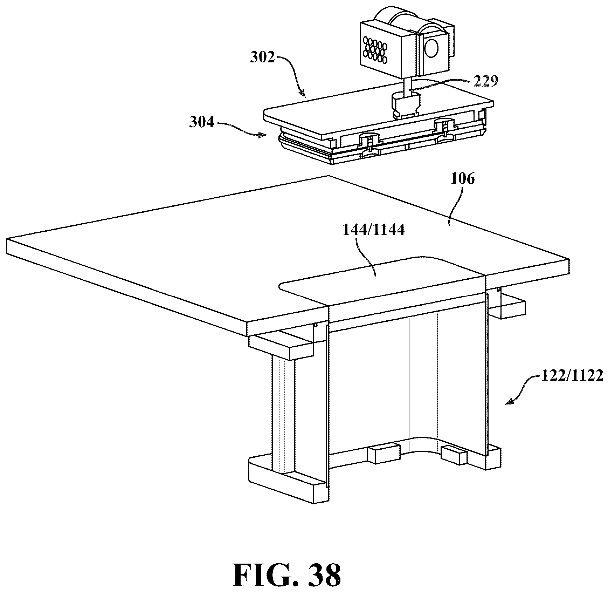

Referring to FIG. 37, with the build platform 144 or sensor platform 1144 raised, the actuator 300 raises the machine lid 302, e.g. via retraction of the chain 229, which also raises the box lid 304 due to the connection between the two. Lifting the machine lid 302 with the box lid 304 exposes the raised build platform 144 or sensor platform 1144 and the sensor assembly 1152 (not shown in FIG. 37, as discussed above) supported thereon. In the fully raised position, the lid management system 114 exposes the build platform 144 for a build operation, or the sensor platform 1144 and the sensor assembly 1152 for a data collection operation, with enough clearance for a build head to pass below the box lid 304 and over the build platform 144 or the sensor platform 1144 and the sensor assembly 1152. However, there is, in certain non-limiting examples, a gap between an inner, e.g., top, surface of the process chamber floor 106 and a build surface of the build platform 144 or the sensor platform 1144. At FIG. 38, the build platform 144 is raised to a level where the build surface of the build platform 144 is or is nearly flush with the inner surface of the process chamber floor 106.

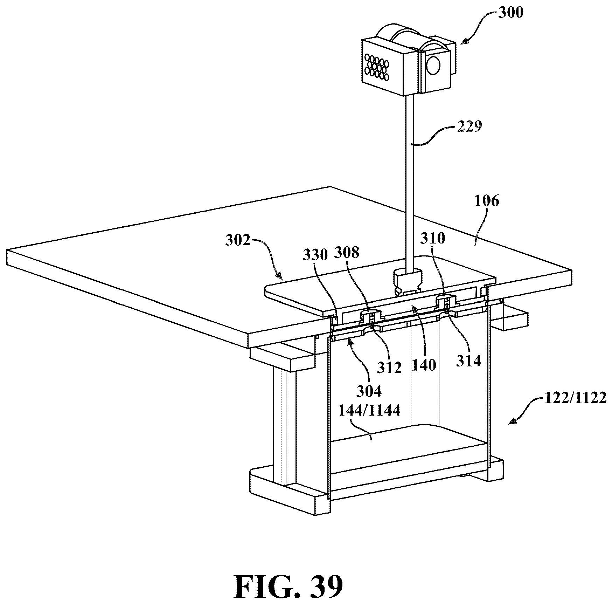

Referring now to FIG. 39, at the completion of the build process or data collection process, and with the build platform 144 or sensor platform 1144 in a lowered position, the machine lid 302 and the box lid 304 are lowered toward the opening 140 in the process chamber floor 106. The machine lid 302 and the box lid 304 are lowered until the box lid 304 registers with the build box 122 or calibration box 1122 and seals thereagainst. Next, the clamp devices 308 and 310 are actuated (e.g., pneumatically) to release the studs 312 and 314 and the seal 330 of the machine lid 302 is inflated to again seal against the perimeter of the opening 140. The build box 122 or calibration box 1122 is then lowered by the lift platform assembly, as shown by FIG. 39, back onto the elevated conveyor 126, which carries the build box 122 or calibration box 1122 to the outfeed conveyor 128 (FIG. 21).

Referring to FIG. 41, another aspect of a lid management system 400 is illustrated and includes components that are similar to the lid management system 114 described above including an actuator 402, a machine lid 404 and a box lid 406. The actuator 402 is any suitable actuator, such as a telescoping lifting column that is internally motor-driven. The actuator 402 has, in certain non-limiting examples, an integrated brake that can be used to stop movement of the actuator 402 based on a signal, such as from a proximity sensor or a control input from an operator. The actuator 402 includes, in certain non-limiting examples, a telescoping rod that connects to a connector 408. As above, the connector 408 is, in certain non-limiting examples, a compliance device that automatically compensates for some X-Y positioning deviations between the rod and the connector 408 when connecting together.

Illustrated in FIG. 41 is an actuator mounting assembly 410 that can be used to mount the lid management system 400 to a top plate that forms a process chamber ceiling of the process chamber. The actuator mounting assembly 410 includes a mounting bracket 435 that includes vertically extending mounting legs 414 and 416 with end flanges 418 and 420 that can be mounted to the top plate of the process chamber. A laterally extending mount 422 extends between the mounting legs 414 and 416 forming an inverted U-shape. The mount 422 is used to mount to an end of the actuator 402 with the mounting legs 414 and 416 extending down opposite sides of the actuator 402. Each end flange 418 and 420 can include an adjustable fastener 424. In the illustrated aspect, the adjustable fasteners 424 are located at opposite ends of the end flanges 418 and 420. The adjustable fasteners 424 allow for height adjustment of the mounting legs 414 and 416, which allows for pitch and roll adjustment of the actuator 402 to adjust a travel path of the telescoping rod. A spool 426, such as an e-spool, commercially available from igus GmbH of East Providence, RI, can be used to manage both electrical and pneumatic cables and hoses, represented by element 428, and allow for movement of the electrical and pneumatic connections, for example, with the telescoping rod and machine lid 404.

As discussed above, a bellows 432 is, in certain non-limiting examples, mounted to a top face 434 of the machine lid 404. One end 436 of the bellows 432 is, in certain non-limiting examples, sealingly mounted to the top face 434 of the machine lid 404 to form an air-tight seal therebetween while an opposite end 438 is, in certain non-limiting examples, sealingly mounted to the top plate of the process chamber. Thus, the bellows 432 can expand and contract in an axial direction as the machine lid 404 is moved toward and away from the process chamber floor. In the expanded configuration with the machine lid 404 sealed against the perimeter of the opening in the process chamber floor, the bellows 432 can be used to isolate the air vent components connected to the air vent system from the surrounding inert environment within the process chamber.

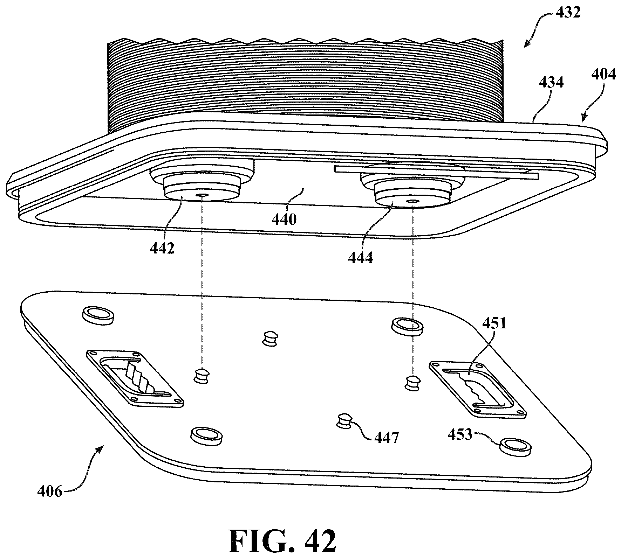

Referring also to FIG. 42, on a face 440 of the machine lid 404 that is opposite the face 434 are clamp devices 442 and 444. The clamp devices 442 and 444 are, in certain non-limiting examples, powered, such as using pneumatic or hydraulic power. The clamp devices 442 and 444 clamp onto studs 447 that are mounted to box lid 406 in the fashion described above. As can be seen, four studs 447 are provided, which can allow the box-shaped build box with box lid 406 to be fed into the intake conveyor in multiple orientations corresponding to the four sides of the build box. Handles 451 are, in certain non-limiting examples, provided to manually handle the box lid 406. Breather valves 453 are, in certain non-limiting examples, provided that allow air to enter and exit the build box 122 without allowing escape of powders located therein.

Shown in FIG. 41 is a pressure relief valve 452. The pressure relief valve 452 connects to the air vent system to allow air within the build box 122 to be vented out to the surroundings. As can be seen, the pressure relief valve 452 is located within an interior of the bellows 432 to isolate the pressure relief valve 452 from the inert environment. A tube 455 is, in certain non-limiting examples, used to connect the pressure relief valve 452 to the vent system. Any number of valves are, in certain non-limiting examples, used to vent the build box 122 or calibration box 1122. In some aspects, the pressure relief valve 452 operates when a pressure within the build box 122 or calibration box 1122 reaches a predetermined pressure.

In some aspects, the lid management system 400 includes, in certain non-limiting examples, one or more sensors in order for a controller to determine and/or monitor various lift events. As one example, the actuator 402 itself includes, in certain non-limiting examples, a position or proximity sensor that can be used by the controller to determine axial position of the telescoping rod and thus the position of the machine lid 404. In some aspects, a proximity sensor, represented by element 456, is, in certain non-limiting examples, provided to determine position of the machine lid 404. Another proximity sensor, represented by element 458, is, in certain non-limiting examples, used to determine the presence of the box lid 406 connected to the machine lid 404. Further, the connector 408 has, in certain non-limiting examples, a sensor to provide a signal indicative of a lock/unlock condition. With the various sensors, the system can monitor position of the machine lid 404, presence of the box lid 406 and lock status of the machine lid 404 during lifting and lowering events and if there is an out-of-parameter condition present. In some aspects, an indication is, in certain non-limiting examples, provided to an operator of the various conditions detected by the sensors and whether an out-of-parameter condition is present so that the operator can take an action accordingly.

### Calibration and Build Process

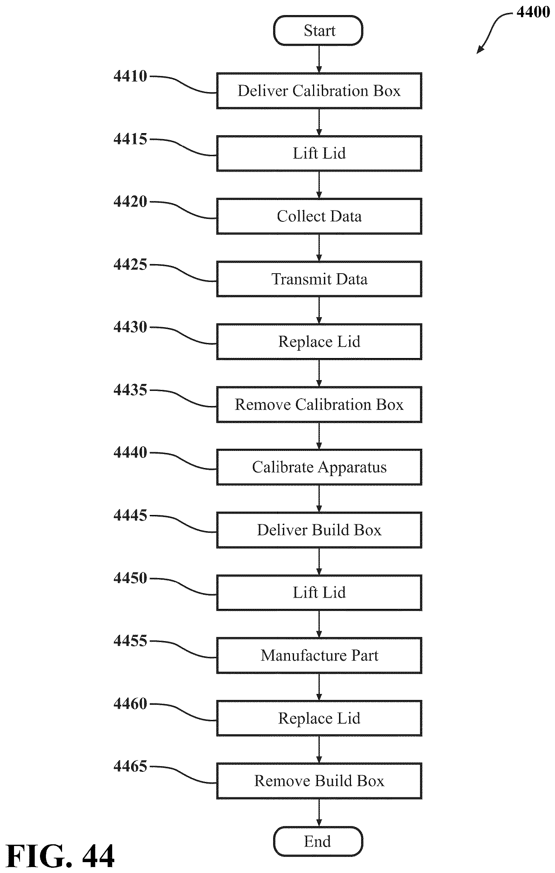

FIG. 44 is a process flow diagram illustrating an example process 4400 for calibrating the additive manufacturing apparatus using the calibration box and subsequently manufacturing a part with the calibrated manufacturing apparatus and using the build box. The computing device 65 may include memory having instructions executable by a processor to control the various components of the manufacturing apparatus to perform the process 4400.

The process 4400 begins at a block 4410. At the block 4410, the calibration box 1122 is delivered to the process chamber 110 of the additive manufacturing apparatus 100 with the box management system 116. For example, the calibration box 1122 is, in certain non-limiting examples, moved with the intake conveyor 120, the elevated conveyor 126, and/or the chain conveyors 244 and 246 to a position on or above the lift platform assembly 136 of the box management system 116 as described herein. The lift platform assembly 136, in certain non-limiting examples, lifts the calibration box 1122, e.g., into abutment with the bottom surface of the process chamber floor 106 at opening 140 of the process chamber floor 106, e.g., as described herein.

At a block 4415, after delivering the calibration box 1122 at the block 4410 and before collecting data regarding operation of the additive manufacturing apparatus 100 at a block 4420, the machine lid 302 covering the opening 140 of the process chamber floor 106 and/or the box lid 304 is lifted away from the opening 140 with the lid management system 114, e.g., as described herein. Air from within the calibration box 1122 may be evacuated prior to lifting the machine lid 302, e.g., with the vent system and as described herein.

At the block 4420, data regarding operation of the additive manufacturing apparatus 100 is collected with one or more sensors 1153, 1159, 1169 of the calibration box 1122. For example and as described herein, an amount of material deposited by the printing assembly 20 of the additive manufacturing apparatus 100 on the removable material plate 1155 is, in certain non-limiting examples, measured with the load cell 1153 of the calibration box 1122. As another example, an amount of radiation emitted by the additive manufacturing apparatus 100 for performing at least one of SLS), DMLS, or EBM is, in certain non-limiting examples, measured with one or more power meters 1169. As another example, an amount of runout of one or more rollers 19 of the recoat assembly 18 of the additive manufacturing apparatus 100 is, in certain non-limiting examples, measured with one or more confocal lasers 1159 of the calibration box 1122.

At a block 4425, the collected data from the block 4420 is transmitted by the communication unit 1181 to the computing device 65, a server computer, and/or the like via the network 66, e.g., as described herein.

At a block 4430, after the data is collected at the block 4425 and before the calibration box 1122 is removed from the process chamber 110 at a block 4435, the machine lid 302 is replaced to cover the opening 140 of the process chamber floor 106 and/or the box lid 304 is replaced, e.g., with the lid management system 114 and as described herein.

At the block 4435, the calibration box 1122 is removed from the process chamber 110 with the box management system 116. For example, the lift platform assembly 136, in certain non-limiting examples, lowers the calibration box 1122 away from the process chamber floor 106, and the chain conveyors 244 and 246, the elevated conveyor 126 and/or the outfeed conveyor 128, in certain non-limiting examples, carries the calibration box 1122 away from the apparatus 100, e.g., as described herein.

At a block 4440, the additive manufacturing apparatus 100 is calibrated based on the collected data at the block 4420. For example, calibrating the additive manufacturing apparatus 100 includes, in certain non-limiting examples, adjusting a parameter of the printing assembly 20 or cleaning a component of the printing assembly 20, e.g., when data collected from the load cell 1153 indicates that the printing assembly 20 is not depositing an expected amount of material. As another example, calibrating the additive manufacturing apparatus includes, in certain non-limiting examples, adjusting a parameter of the additive manufacturing apparatus related to performing at least one of SLS, DMLS, or EBM, e.g., when data collected by one or more power meters 1169 indicates that one or more components, e.g., lasers, of the additive manufacturing apparatus 100 are not providing radiation at an expected power level. As another example, calibrating the additive manufacturing apparatus 100 includes, in certain non-limiting examples, adjusting a parameter of the recoat assembly 18 or cleaning the roller 19, e.g., when data from one or more confocal lasers 1159 is out of round (e.g., has a runout that is above a threshold) or is contaminated. In some embodiments, block 4440 may be executed before, concurrently, or after blocks 4430 and 4435.

At a block 4445, after the additive manufacturing apparatus 100 is calibrated at the block 4440, the build box 122 is delivered to the process chamber 110 of the additive manufacturing apparatus 100 with the box management system 116. For example, the build box 122 is, in certain non-limiting examples, moved with the intake conveyor 120, the elevated conveyor 126, and/or the chain conveyors 244 and 246 to a position on or above the lift platform assembly 136 of the box management system 116 as described herein. The lift platform assembly 136, in certain non-limiting examples, lifts the build box 122, e.g., into abutment with the bottom surface of the process chamber floor 106 at opening 140 of the process chamber floor 106, e.g., as described herein.

At a block 4450, after delivering the build box 122 at the block 4450 and before manufacturing a part on the build platform 144 of the build box 122 at a block 4460, the build platform 144 is raised and the machine lid 302 covering the opening 140 of the process chamber floor 106 and/or the box lid 304 is lifted away from the opening 140 with the lid management system 114, e.g., as described herein.

At a block 4455, a part is manufactured on the build platform 144 of the build box 122 by the additive manufacturing apparatus 100 that was calibrated at the block 4440, e.g., as described herein.

At a block 4460, after the part is manufactured at the block 4455, the build platform 144 is lowered and the machine lid 302 is replaced to cover the opening 140 of the process chamber floor 106 and/or the box lid 304 is replaced, e.g., with the lid management system 114 and as described herein.

At a block 4465, after the machine lid 302 is replaced at the block 4465, the build box 122 with the manufactured part therein is removed from the process chamber 110 with the box management system 116. In certain non-limiting examples, the lift platform assembly 136 lowers the build box 122 away from the process chamber floor 106, and the chain conveyors 244 and 246, the elevated conveyor 126 and/or the outfeed conveyor 128 carries the build box 122, along with the manufactured part, away from the apparatus 100, e.g., as described herein.

From the above, it is to be appreciated that defined herein is a system and method to set a parameter of, or otherwise calibrate an apparatus for forming a three-dimensional article, using a calibration box with one or more sensors supported therein, and a box management system for delivering the calibration box to, and retrieving the calibration box from, the apparatus. The system enables inspection and calibration of the apparatus for forming a three-dimensional article without requiring removal and refill of an inert gas to an environment of the additive manufacturing apparatus, without requiring exposure of an operator to a low oxygen environment and limits potential contact of the operator with potentially harmful and combustible powders.

Further aspects described herein are provided by the subject matter of the following clauses:
A system for calibrating an apparatus for forming a three-dimensional article includes an apparatus configured to form a three-dimensional article. The apparatus includes a process chamber. The apparatus includes a box management system comprising at least one of a conveyor arrangement or a lift platform assembly configured to deliver a calibration box to the process chamber. The system includes the calibration box. The calibration box includes an enclosure body and one or more sensors supported within the enclosure body.

The system of any of the preceding clauses, further comprising a build box that includes a second enclosure body and a build platform vertically movable within the second enclosure body, the build box usable with the box management system.

The system of any of the preceding clauses, wherein the calibration box includes a sensor platform vertically movable within the enclosure body, the one or more sensors supported by the sensor platform.

The system of any of the preceding clauses, wherein the apparatus includes a process chamber floor with an opening, and wherein the box management system includes the lift platform and an actuator that raises and lowers the calibration box toward and away from the opening of the process chamber floor.

The system of any of the preceding clauses, wherein the calibration box includes blocking structures at opposing sides of the enclosure body.

The system of any of the preceding clauses, wherein the calibration box includes a top flange plate and one or more slugs supported by the top flange plate. The system further comprising a sensor supported by the apparatus or the box management system and configured to detect the one or more slugs of the calibration box.

The system of any of the preceding clauses, wherein the apparatus includes a printing assembly that deposits material, and wherein the one or more sensors of the calibration box include a load cell configured to measure material deposited by the printing assembly.

The system of any of the preceding clauses, wherein the apparatus is a selective laser sintering (SLS) apparatus, a direct metal laser sintering (DMLS) apparatus, an electron beam melting (EBM) apparatus, or Binder Jet apparatus consisting of an infrared heating source, and wherein the one or more sensors of the calibration box include a power meter configured to measure power output during operation of at least one of the SLS apparatus, the DMLS apparatus, the EBM apparatus, or the infrared heating source.

The system of any of the preceding clauses, wherein the apparatus includes a recoat assembly that includes a roller or blade, and wherein the one or more sensors of the calibration box include a physical measuring device or a confocal laser configured to measure the roller or blade geometry.

The system of any of the preceding clauses, wherein the calibration box comprises a top flange plate that defines an opening and wherein the one or more sensors are accessible via the opening of the top flange plate.

The system of any of the preceding clauses, wherein the calibration box includes a top flange plate having an opening, and the system further comprises a box lid covering the opening.

The system of any of the preceding clauses, wherein the calibration box comprises a laser base (1161) configured to support a physical measuring device or a confocal laser at one of a plurality of predetermined positions.

The system of any of the preceding clauses, wherein the calibration box includes a laser cover movable from a first position covering a physical measuring device or a confocal laser to a second position not covering the physical measuring device or the confocal laser.

The system of any of the preceding clauses, wherein the calibration box includes a communication unit communicatively coupled to the one or more sensors and configured to transmit data collected by the one or more sensors.

The system of any of the preceding clauses, wherein the calibration box includes a removable material plate.

A calibration box for calibrating an apparatus for forming a three-dimensional article includes an enclosure body sized to be engaged with a box management system of the apparatus for forming a three-dimensional article. The calibration box includes a top flange plate that defines an opening. The calibration box includes a sensor platform within the enclosure body. The calibration box includes one or more sensors for performing calibration measurements of the apparatus, the one or more sensors being supported by the sensor platform within the enclosure body and accessible via the opening of the top flange plate.

The calibration box of any of the preceding clauses, wherein the senor platform is vertically movable within the enclosure body.

The calibration box of any of the preceding clauses, wherein the one or more sensors include a load cell.

The calibration box of any of the preceding clauses, wherein the load cell includes a removable material plate.

The calibration box of any of the preceding clauses, wherein the one or more sensors include a power meter.

The calibration box of any of the preceding clauses further comprising a power meter base configured to support the power meter at a first predetermined position and at a predetermined second position.

The calibration box of any of the preceding clauses, wherein the one or more sensors include a physical measuring device or a confocal laser configured to measure a roller or blade geometry.

The calibration box of any of the preceding clauses further comprising a laser base configured to support the physical measuring device or the confocal laser at one of a plurality of predetermined positions.

The calibration box of any of the preceding clauses, wherein the calibration box includes a laser cover movable from a first position covering the physical measuring device or the confocal laser to a second position not covering the physical measuring device or the confocal laser.

The calibration box of any of the preceding clauses, wherein the calibration box includes a communication unit communicatively coupled to the one or more sensors and configured to transmit data collected by the one or more sensors.

A method for manufacturing a part with an additive manufacturing apparatus includes delivering a calibration box to a process chamber of the additive manufacturing apparatus with a box management system. The method includes collecting data regarding operation of the additive manufacturing apparatus with one or more sensors of the calibration box. The method includes removing the calibration box from the process chamber with the box management system. The method includes calibrating the additive manufacturing apparatus based on the collected data regarding operation of the additive manufacturing apparatus. The method includes delivering a build box to the process chamber of the additive manufacturing apparatus with the box management system. The method includes manufacturing a part on a build platform of the build box with the calibrated additive manufacturing apparatus.

The method of any of the preceding clauses, wherein collecting data regarding operation of the additive manufacturing apparatus includes measuring, with a load cell of the calibration box, an amount of material deposited by a printing assembly of the additive manufacturing apparatus.

The method of any of the preceding clauses, wherein calibrating the additive manufacturing apparatus based on the collected data includes at least one of adjusting a parameter of the printing assembly or cleaning a component of the printing assembly.

The method of any of the preceding clauses, wherein collecting data regarding operation of the additive manufacturing apparatus includes measuring, with a power meter of the calibration box, an amount of radiation emitted by the additive manufacturing apparatus for performing at least one of selective laser sintering (SLS), direct metal laser sintering (DMLS), or electron beam melting (EBM).

The method of any of the preceding clauses, wherein calibrating the additive manufacturing apparatus based on the collected data includes at least one of adjusting a parameter of the additive manufacturing apparatus related to performing at least one of selective laser sintering (SLS), direct metal laser sintering (DMLS), or electron beam melting (EBM).

The method of any of the preceding clauses, wherein collecting data regarding operation of the additive manufacturing apparatus includes measuring, with a confocal laser of the calibration box, an amount of runout of a roller of a recoat assembly of the additive manufacturing apparatus.

The method of any of the preceding clauses, wherein calibrating the additive manufacturing apparatus based on the collected data includes at least one of adjusting a parameter of the recoat assembly or cleaning the roller.

The method of any of the preceding clauses further comprising transmitting the collected data with a communication unit of the calibration box.

The method of any of the preceding clauses, wherein delivering the calibration box to the process chamber of the additive manufacturing apparatus includes lifting the calibration box with a lift platform assembly of the box management system.

The method of any of the preceding clauses, wherein delivering the build box to the process chamber of the additive manufacturing apparatus with the box management system includes lifting the build box with the lift platform assembly of the box management system.

The method of any of the preceding clauses further comprising lifting a lid covering an opening in a process chamber floor of the additive manufacturing apparatus after delivering the calibration box and before collecting the data regarding operation of the additive manufacturing apparatus.

The method of any of the preceding clauses further comprising replacing the lid before removing the calibration box from the process chamber.

The method of any of the preceding clauses further comprising lifting a lid covering an opening in a process chamber floor of the additive manufacturing apparatus after delivering the build box and before manufacturing the part on the build platform.

The method of any of the preceding clauses further comprising, after manufacturing the part on the build platform, replacing the lid and then removing the build box from the process chamber with the box management system.

While particular aspects have been illustrated and described herein, it should be understood that various other changes and modifications can be made without departing from the scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

It will be apparent to those skilled in the art that various modifications and variations can be made to the aspects described herein without departing from the scope of the claimed subject matter. Thus, it is intended that the specification cover the modifications and variations of the various aspects described herein provided such modification and variations come within the scope of the appended claims and their equivalents.

## Claims

1. A system for calibrating an apparatus (100) for forming a three-dimensional article, the system comprising:
an apparatus (100) configured to form a three-dimensional article, the apparatus (100) including a process chamber (110), the apparatus (100) including a box management system (116) comprising at least one of a conveyor arrangement or a lift platform assembly (136) configured to deliver a calibration box (1122) to the process chamber (110); and
the calibration box (1122) including an enclosure body (1200) and one or more sensors (1153, 1159, 1169) supported within the enclosure body (1200).

2. The system of claim 1, wherein the calibration box (1122) includes a sensor platform (1144) vertically movable within the enclosure body (1200), the one or more sensors (1153, 1159, 1169) supported by the sensor platform (1144).

3. The system of any of claims 1-2, wherein the apparatus (100) includes a process chamber floor (106) with an opening (140), and wherein the box management system (116) includes the lift platform assembly (136) and an actuator (142) that raises and lowers the calibration box (1122) toward and away from the opening (140) of the process chamber floor (106).

4. The system of any of claims 1-3, wherein the calibration box (1122) includes blocking structures (1205) at opposing sides of the enclosure body (1200).

5. The system of any of claims 1-4, wherein the calibration box (1122) includes a top flange plate (1202) and one or more slugs (1209) supported by the top flange plate (1202), and the system further comprising a sensor supported by the apparatus (100) or the box management system (116) and configured to detect the one or more slugs (1209) of the calibration box (1122).

6. The system of any of claims 1-5, wherein the apparatus (100) includes a printing assembly (20) that deposits material, and wherein the one or more sensors (1153, 1159, 1169) of the calibration box (1122) include a load cell (1153) configured to measure material deposited by the printing assembly (20).

7. The system of any of claims 1-6, wherein the apparatus (100) is a selective laser sintering (SLS) apparatus, a direct metal laser sintering (DMLS) apparatus, an electron beam melting (EBM) apparatus (100), or Binder Jet apparatus consisting of an infrared heating source, and wherein the one or more sensors (1153, 1159, 1169) of the calibration box (1122) include a power meter (1169) configured to measure power output during operation of at least one of the SLS apparatus, the DMLS apparatus, the EBM apparatus, or the infrared heating source.

8. A calibration box (1122) for calibrating an apparatus (100) for forming a three-dimensional article, the calibration box (1122) comprising:
an enclosure body (1200) sized to be engaged with a box management system (116) of the apparatus (100) for forming a three-dimensional article;
a top flange plate (1202) that defines an opening (1204);
a sensor platform (1144) within the enclosure body (1200); and
one or more sensors (1153, 1159, 1169) for performing calibration measurements of the apparatus (100), the one or more sensors (1153, 1159, 1169) being supported by the sensor platform (1144) within the enclosure body (1200) and accessible via the opening (1204) of the top flange plate (1202).

9. The calibration box (1122) of claim 8, wherein the sensor platform (1144) is vertically movable within the enclosure body (1200).

10. The calibration box (1122) of any of claims 8-9, wherein the one or more sensors (1153, 1159, 1169) include at least one of a load cell (1153) or a power meter (1169).

11. The calibration box (1122) of any of claims 8-10, wherein the calibration box (1122) includes a communication unit (1181) communicatively coupled to the one or more sensors (1153, 1159, 1169) and configured to transmit data collected by the one or more sensors (1153, 1159, 1169).

12. The calibration box (1122) of any of claims 8-11, further comprising a power meter base (1171) configured to support a power meter (1169) at a first predetermined position and at a predetermined second position.

13. The calibration box (1122) of any of claims 8-12, wherein the one or more sensors (1153, 1159, 1169) include a physical measuring device or a confocal laser (1159) configured to measure a geometry of a roller (19) or a blade.

14. The calibration box (1122) of claim 13, further comprising a laser base (1161) configured to support the physical measuring device or the confocal laser (1159) at one of a plurality of predetermined positions.

15. The calibration box (1122) of any of claims 13 or 14, wherein the calibration box (1122) includes a laser cover (1165) movable from a first position covering the physical measuring device or the confocal laser (1159) to a second position not covering the physical measuring device or the confocal laser (1159).
